# EUROPEAN PATENT APPLICATION

(11) **EP 4 625 910 A1**
(43) Date of publication of application: **01.10.2025**
(21) Application number: 22968198.6
(22) Date of filing: 15.12.2022
(51) Int. Cl.: H04L 27/00, H04W 52/02

(54) **COMMUNICATION METHOD AND RELATED DEVICE**

(71) Applicant: Huawei Technologies Co., Ltd., Shenzhen, Guangdong 518129 (CN)
(72) Inventor: WU, Xiaochuan, Shenzhen, Guangdong 518129 (CN); MA, Ning, Shenzhen, Guangdong 518129 (CN); GUO, Ziyu, Shenzhen, Guangdong 518129 (CN)
(74) Representative: Maiwald GmbH
(86) International application number: PCT/CN2022/139367
(87) International publication number: WO 2024/124490

(57) **Abstract**

This application provides a communication method and a related device, to wake up a remote device based on a parameter corresponding to an optical signal, so that overheads of parsing a wake-up indication by the remote device can be reduced. **In** addition, when the remote device does not continuously keep alive a communication link for bidirectional communication between the remote device and a control device, the remote device can still be woken up at any time, so that the remote device in energy-saving mode can power off more components, to expect to improve an energy-saving effect. **In** the method, the control device transmits a first optical signal to a first remote device, where a parameter corresponding to the first optical signal is for waking up the first remote device. **In** some implementations, the parameter corresponding to the first optical signal includes at least one of the following: optical signal strength or loss of signal (loss of signal, LOS) detection.

## Description

### TECHNICAL FIELD

This application relates to the communication field, and in particular, to a communication method and a related device.

### BACKGROUND

As wireless communication technologies develop from 2G, 3G, and 4G to 5G, future 6G, and the like, network communication standards also continuously evolve accordingly, and requirements for bearer capabilities of network devices are increasingly high. A component like a filter or a power amplifier (power amplifier, PA) may be newly added to a network device, to enhance a bearer capability of the network device.

However, because a quantity of components in the network device increases, power consumption of the network device greatly increases. Therefore, how to implement energy-saving optimization of the network device is an urgent technical problem to be resolved.

### SUMMARY

This application provides a communication method and a related device, to wake up a remote device based on a parameter corresponding to an optical signal, so that overheads of parsing a wake-up indication by the remote device can be reduced. In addition, when the remote device does not continuously keep alive a communication link for bidirectional communication between the remote device and a control device, the remote device can still be woken up at any time, so that the remote device in energy-saving mode can power off more components, to expect to improve an energy-saving effect.

A first aspect of this application provides a communication method. The method is applied to a control device. The method is performed by the control device, the method is performed by a part of components (for example, a processor, a chip, or a chip system) in the control device, or the method may be implemented by a logical module or software that can implement all or a part of functions of the control device. In the first aspect and possible implementations thereof, an example in which the method is performed by the control device is used for description. In the method, the control device transmits a first optical signal to a first remote device, where a parameter corresponding to the first optical signal is for waking up the first remote device.

Based on the foregoing technical solution, when the first remote device is in energy-saving mode, the control device may transmit the first optical signal to the first remote device when the control device determines that the first remote device needs to be woken up, where the parameter corresponding to the first optical signal is for waking up the first remote device. In other words, after receiving the first optical signal, the first remote device may wake up the first remote device based on the parameter corresponding to the first optical signal. Therefore, in comparison with an implementation in which a remote device can further determine a wake-up indication only by parsing an optical signal and based on a parsing result, in the foregoing technical solution, the first remote device can be woken up based on the parameter corresponding to the first optical signal, so that overheads of parsing the wake-up indication by the remote device can be reduced, to expect to improve an energy-saving effect.

In addition, in the foregoing implementation in which the first remote device is woken up based on the parameter corresponding to the first optical signal, when the first remote device does not continuously keep alive a communication link for bidirectional communication between the remote device and the control device, the first remote device can still be woken up at any time, so that the first remote device in energy-saving mode can power off more components, to expect to further improve the energy-saving effect.

It should be understood that, in this application, that the remote device (for example, the first remote device, or a second remote device or a third remote device that may occur hereinafter) is in energy-saving mode means that a part of functional components in the remote device are in power-off state (or a sleep state, a low power consumption state, a standby state, or the like). Accordingly, the energy-saving mode may be referred to as a sleep mode, a low power consumption mode, a standby mode, or another name. This is not limited herein.

It should be understood that, in this application, the remote device is a network device having a radio signal processing function, the control device is a network device having a function of controlling the remote device, and the remote device and the control device may have other names.

For example, the remote device is radio equipment (radio equipment, RE), and the control device is a radio equipment controller (radio equipment controllor, REC).

For another example, the remote device is a remote radio unit (remote radio unit, RRU), and the control device is a baseband unit (baseband unit, BBU).

For another example, the remote device is an active antenna unit (active antenna unit, AAU), and the control device is a BBU.

For another example, the remote device is a radio unit (radio unit, RU), and the control device is a distributed unit (distributed unit, DU).

For another example, the remote device is an RE/RRU/AAU/RU, and the control device is a remote control device. The remote control device includes but is not limited to a remote network management device, an operation and maintenance center (Operation Management Center, OMC), a base station control unit, and the like.

In a possible implementation of the first aspect, the parameter corresponding to the first optical signal includes at least one of the following: optical signal strength or loss of signal (loss of signal, LOS) detection.

It should be understood that the optical signal strength refers to an optical signal power value, and is for waking up the first remote device when a power value of the first optical signal is a specific value (the optical signal power value is within a preset range). Particularly, when the specific value is 0 (or the preset range is being greater than 0), the optical signal strength may alternatively be expressed as whether there is an optical signal, whether there is an optical power, whether there is a flash, or the like.

Optionally, when the parameter corresponding to the first optical signal includes the optical signal strength, after the first remote device receives the first optical signal, waking up of the first remote device may be triggered when the first remote device determines that the value of the optical signal strength of the first optical signal is a preset value (or within the preset range).

Optionally, when the parameter corresponding to the first optical signal includes the LOS detection, after the first remote device receives the first optical signal, waking up of the first remote device may be triggered when the first remote device determines that a LOS signal occurs (or no LOS signal occurs) for the first optical signal.

Optionally, when the parameter corresponding to the first optical signal includes the optical signal strength and the LOS detection, after the first remote device receives the first optical signal, waking up of the first remote device may be triggered when the first remote device determines that the value of the optical signal strength of the first optical signal is a preset value (or within the preset range) and that a LOS signal occurs (or no LOS signal occurs) for the first optical signal.

It should be noted that, the parameter corresponding to the first optical signal may alternatively be implemented in another manner in addition to the foregoing implementations. For example, the parameter corresponding to the first optical signal may include optical signal energy magnitude, duration of a continuous optical signal, or another parameter corresponding to the optical signal. This is not limited herein.

In a possible implementation of the first aspect, that a parameter corresponding to the first optical signal is for waking up the first remote device includes: When the parameter corresponding to the first optical signal includes the optical signal strength, the optical signal strength is represented as N bits; and when a value of the N bits is a first value, the first optical signal is for waking up the first remote device, where N is a positive integer.

Based on the foregoing technical solution, when the parameter corresponding to the first optical signal includes the optical signal strength, after the first remote device receives the first optical signal, the first remote device may represent the received first optical signal as the N bits, and determine to wake up the first remote device when the value of the N bits is the first value, so that the first remote device is flexibly controlled, based on the value of the N bits, to perform corresponding behavior.

Optionally, when the value of the N bits is a value other than the first value, the control device may indicate, based on the another value, the first remote device to perform another behavior, for example, indicate the first remote device to align clock information, indicate the first remote device to transmit related information (for example, an operating voltage and an operating current) of one or more power supplies, or perform another implementation. This is not limited herein.

Optionally, the N bits include at least two parts of bits. For example, a first part of bits may be denoted as N1 bits, and a second part of bits may be denoted as N2 bits, where the N1 bits indicate a target remote device that is to be woken up (for example, a value of the N1 bits is an identifier or an index number of the target remote device), and the N2 bits are for waking up the target remote device.

Optionally, when the value of the N bits is the first value, the N bits indicate to wake up the first remote device. When the value of the N bits is a second value, the N bits indicate to wake up another remote device (for example, the second remote device mentioned hereinafter).

Optionally, the first value is a pre-configured value, or the first value is a group of pre-configured values. When the first value is the group of pre-configured values, the group of values satisfy that values of M bits in the N bits are 1 and that values of N-M remaining bits are 0, where M is an integer less than or equal to N.

In a possible implementation of the first aspect, the first optical signal is a periodic signal.

Based on the foregoing technical solution, the first optical signal for waking up the first remote device may be the periodic signal, and the parameter corresponding to the first optical signal on which transmission is performed in each periodicity indicates to wake up the first remote device, so that the first remote device can be woken up in each periodicity, to expect to improve a probability that the first remote device is woken up.

In a possible implementation of the first aspect, the first remote device is included in at least two remote devices, and the at least two remote devices are cascaded to the control device.

Based on the foregoing technical solution, the first remote device woken up based on the parameter corresponding to the first optical signal is included in the at least two remote devices, and the at least two remote devices are cascaded to the control device, so that the solution is not restricted by a direct-connection scenario, and can be applied to a cascading scenario (for example, the at least two remote devices and the control device are networked in a chain form, a star form, or a mesh-network form).

In a possible implementation of the first aspect, the first remote device is an intermediate device that is in the at least two remote devices and that is cascaded to the control device, and the method further includes: The control device transmits a second optical signal to the second remote device via the first remote device, where a parameter corresponding to the second optical signal is for waking up the second remote device.

Based on the foregoing technical solution, when the first remote device is the intermediate device that is in the at least two remote devices and that is cascaded to the control device, the control device may further transmit the second optical signal to another remote device via the first remote device, and wake up the another remote device based on the parameter corresponding to the second optical signal, to flexibly control different remote devices in a cascading scenario.

In a possible implementation of the first aspect, that the control device transmits a second optical signal to the second remote device via the first remote device includes: After determining that the first remote device is woken up, the control device transmits the second optical signal to the second remote device via the first remote device.

Based on the foregoing technical solution, after determining that the first remote device is woken up, the control device transmits the second optical signal to the second remote device via the first remote device, so that the first remote device identifies the second optical signal after being woken up, and transmits the second optical signal to the second remote device when determining that a receiver of the second optical signal indicates the second remote device. In other words, before the first remote device is woken up, the first remote device may power off (or sleep) a component corresponding to a communication link between the first remote device and the second remote device (and a component configured to identify the second optical signal), to expect to further improve the energy-saving effect of the first remote device.

Optionally, a process in which the control device transmits the second optical signal to the second remote device via the first remote device does not need to depend on waking up the first remote device. For example, when the first remote device is in energy-saving mode, the first remote device may maintain the component corresponding to the communication link between the first remote device and the second remote device (and the component configured to identify the second optical signal) in power-on state, and support forwarding of the second optical signal before the first remote device is woken up, so that the control device flexibly controls a wake-up process of each remote device.

In a possible implementation of the first aspect, the first remote device is an endpoint device that is in the at least two remote devices and that is cascaded to the control device; and that the control device transmits a first optical signal to a first remote device includes: The control device transmits the first optical signal to the first remote device via the third remote device.

Based on the foregoing technical solution, when the first remote device is the endpoint device that is in the at least two remote devices and that is cascaded to the control device, the control device may transmit the first optical signal to the first remote device via another remote device (for example, the third remote device), so that the control device flexibly controls the wake-up process of each remote device.

In a possible implementation of the first aspect, the method further includes: The control device transmits indication information to the first remote device, where the indication information indicates the first remote device to enter the energy-saving mode.

Optionally, the indication information may further indicate other information, for example, at least one of a start moment at which the first remote device enters the energy-saving mode, an end moment at which the first remote device enters the energy-saving mode, and duration for which the first remote device enters the energy-saving mode.

Optionally, after the first remote device enters the energy-saving mode based on the indication information (or after the first remote device determines that the first remote device has entered the energy-saving mode, after the first remote device determines to enter the energy-saving mode, or at a moment before entering the energy-saving mode), the first remote device may further transmit a response to the control device, to indicate, by using the response, that the first remote device has entered (or is to enter) the energy-saving mode.

Optionally, the first remote device may alternatively determine, in another manner, to enter the energy-saving mode. For example, the first remote device determines, in a manner of manual configuration by operation and maintenance personnel (or a manner of pre-configuration before delivery), to enter the energy-saving mode in a specific time period.

A second aspect of this application provides a communication method. The method is applied to a first remote device. The method is performed by the first remote device, the method is performed by a part of components (for example, a processor, a chip, or a chip system) in the first remote device, or the method may be implemented by a logical module or software that can implement all or a part of functions of the first remote device. In the second aspect and possible implementations thereof, an example in which the method is performed by the first remote device is used for description. In the method, the first remote device receives a first optical signal. The first remote device wakes up a first remote device based on a parameter corresponding to the first optical signal.

Based on the foregoing technical solution, when the first remote device is in energy-saving mode, the first remote device may wake up, after receiving the first optical signal, the first remote device based on the parameter corresponding to the first optical signal. Therefore, in comparison with an implementation in which a remote device can further determine a wake-up indication only by parsing an optical signal and based on a parsing result, in the foregoing technical solution, the first remote device can be woken up based on the parameter corresponding to the first optical signal, so that overheads of parsing the wake-up indication by the remote device can be reduced, to expect to improve an energy-saving effect.

In addition, in the foregoing implementation in which the first remote device is woken up based on the parameter corresponding to the first optical signal, when the first remote device does not continuously keep alive a communication link for bidirectional communication between the remote device and a control device, the first remote device can still be woken up at any time, so that the first remote device in energy-saving mode can power off more components, to expect to further improve the energy-saving effect.

In a possible implementation of the second aspect, the parameter corresponding to the first optical signal includes at least one of the following: optical signal strength or LOS detection.

It should be understood that the optical signal strength refers to an optical signal power value, and is for waking up the first remote device when a power value of the first optical signal is a specific value (the optical signal power value is within a preset range). Particularly, when the specific value is 0 (or the preset range is being greater than 0), the optical signal strength may alternatively be expressed as whether there is an optical signal, whether there is an optical power, whether there is a flash, or the like.

Optionally, when the parameter corresponding to the first optical signal includes the optical signal strength, after the first remote device receives the first optical signal, waking up of the first remote device may be triggered when the first remote device determines that the value of the optical signal strength of the first optical signal is a preset value (or within the preset range).

Optionally, when the parameter corresponding to the first optical signal includes the LOS detection, after the first remote device receives the first optical signal, waking up of the first remote device may be triggered when the first remote device determines that a LOS signal occurs (or no LOS signal occurs) for the first optical signal.

Optionally, when the parameter corresponding to the first optical signal includes the optical signal strength and the LOS detection, after the first remote device receives the first optical signal, waking up of the first remote device may be triggered when the first remote device determines that the value of the optical signal strength of the first optical signal is a preset value (or within the preset range) and that a LOS signal occurs (or no LOS signal occurs) for the first optical signal.

It should be noted that, the parameter corresponding to the first optical signal may alternatively be implemented in another manner in addition to the foregoing implementations. For example, the parameter corresponding to the first optical signal may include optical signal energy magnitude, duration of a continuous optical signal, or another parameter corresponding to the optical signal. This is not limited herein.

In a possible implementation of the second aspect, the first remote device is in energy-saving mode, and P modules in the first remote device are in power-off state, where P is a positive integer, where the P modules include at least one of the following: a first module, configured to process a radio signal; a second module, configured to supply power to the first module; a third module, configured to transmit an optical signal; and a fourth module, configured to supply power to the third module.

It may be understood that a process in which the first remote device wakes up the first remote device based on the parameter corresponding to the first optical signal may be that the first remote device wakes up a part or all of the P modules.

Based on the foregoing technical solution, when the first remote device is in energy-saving mode, the P modules in the first remote device are in power-off state, and more components are powered off as much as possible, to expect to improve the energy-saving effect. In addition, the P modules may be implemented by using at least one of the foregoing, to improve solution implementation flexibility.

Optionally, both the second module and the fourth module are power supply modules (which are also referred to as power supplies). The second module and the fourth module may be a same module, or may be different modules. This is not limited herein.

In a possible implementation of the second aspect, the module configured to process the radio signal includes at least one of the following: a main central processing unit (central processing unit, CPU), an intermediate frequency application-specific integrated circuit (application specific integrated circuit, ASIC), or a radio frequency unit.

Optionally, the module configured to process the radio signal may further include another component, for example, a component that may exist and that is configured to implement at least one function in encoding, rate matching, scrambling, modulation, layer mapping, precoding, resource element (resource element, RE) mapping, digital beamforming (beamforming, BF), inverse fast Fourier transform (invert fast fourier transform, IFFT), cyclic prefix (cyclic prefix, CP) addition, and analog BF, and for another example, a component that may exist and that is configured to implement at least one function in decoding, de-rate matching, descrambling, demodulation, inverse discrete Fourier transform (inverse discrete fourier transformation, IDFT), channel equalization (or channel estimation), RE demapping, digital BF, fast Fourier transform (fast fourier transform, FFT), CP removal, and analog BF.

In a possible implementation of the second aspect, the first remote device is in energy-saving mode, and Q modules in the first remote device are in power-on state, where Q is a positive integer, where the Q modules include at least one of the following: a fifth module, configured to receive an optical signal; a sixth module, configured to supply power to the fifth module; a seventh module, configured to identify a parameter corresponding to the optical signal; and an eighth module, configured to supply power to the seventh module.

Based on the foregoing technical solution, when the first remote device is in energy-saving mode, the Q modules in the first remote device are in power-on state, and the Q modules are for supporting receiving of the optical signal and implementing waking up at any time based on the parameter corresponding to the optical signal. In addition, the Q modules may be implemented by using at least one of the foregoing, to improve the solution implementation flexibility.

Optionally, the seventh module configured to identify the parameter corresponding to the optical signal may be a micro controller unit (micro controller unit, MCU), an optical signal detection circuit, a thin control unit, or the like.

Optionally, both the sixth module and the eighth module are power supply modules (which are also referred to as power supplies). The sixth module and the eighth module may be a same module, or may be different modules. This is not limited herein.

In a possible implementation of the second aspect, the seventh module is integrated into the fifth module; or the seventh module is integrated into the eighth module.

Based on the foregoing technical solution, the seventh module configured to identify the parameter corresponding to the optical signal may be implemented in any one of the foregoing manners, to improve the solution implementation flexibility.

Optionally, the seventh module may be a module disposed independent of the fifth module or the eighth module.

In a possible implementation of the second aspect, that the parameter corresponding to the first optical signal is for waking up the first remote device includes: When the parameter corresponding to the first optical signal includes the optical signal strength, the optical signal strength is represented as N bits; and when a value of the N bits is a first value, the first optical signal is for waking up the first remote device, where N is a positive integer.

When the parameter corresponding to the first optical signal includes the optical signal strength, after the first remote device receives the first optical signal, the first remote device may represent the received first optical signal as the N bits, and determine to wake up the first remote device when the value of the N bits is the first value, so that the first remote device is flexibly controlled, based on the value of the N bits, to perform corresponding behavior.

Optionally, when the value of the N bits is a value other than the first value, the control device may indicate, based on the another value, the first remote device to perform another behavior, for example, indicate the first remote device to align clock information, indicate the first remote device to transmit related information (for example, an operating voltage and an operating current) of one or more power supplies, or perform another implementation. This is not limited herein.

Optionally, the N bits include at least two parts of bits. For example, a first part of bits may be denoted as N1 bits, and a second part of bits may be denoted as N2 bits, where the N1 bits indicate a target remote device that is to be woken up (for example, a value of the N1 bits is an identifier or an index number of the target remote device), and the N2 bits are for waking up the target remote device.

Optionally, when the value of the N bits is the first value, the N bits indicate to wake up the first remote device. When the value of the N bits is a second value, the N bits indicate to wake up another remote device (for example, a second remote device mentioned hereinafter).

Optionally, the first value is a pre-configured value, or the first value is a group of pre-configured values. When the first value is the group of pre-configured values, the group of values satisfy that values of M bits in the N bits are 1 and that values of N-M remaining bits are 0, where M is an integer less than or equal to N.

In a possible implementation of the second aspect, the first optical signal is a periodic signal.

Based on the foregoing technical solution, the first optical signal for waking up the first remote device may be the periodic signal, and the parameter corresponding to the first optical signal on which transmission is performed in each periodicity indicates to wake up the first remote device, so that the first remote device can be woken up in each periodicity, to expect to improve a probability that the first remote device is woken up.

In a possible implementation of the second aspect, the first remote device is included in at least two remote devices, and the at least two remote devices are cascaded to a control device.

Based on the foregoing technical solution, the first remote device woken up based on the parameter corresponding to the first optical signal is included in the at least two remote devices, and the at least two remote devices are cascaded to the control device, so that the solution is not restricted by a direct-connection scenario, and can be applied to a cascading scenario (for example, the at least two remote devices and the control device are networked in a chain form, a star form, or a mesh-network form).

In a possible implementation of the second aspect, the first remote device is an intermediate device that is in the at least two remote devices and that is cascaded to the control device, and the method further includes: The first remote device receives a second optical signal, where a parameter corresponding to the second optical signal is for waking up a second remote device. The first remote device transmits the second optical signal to the second remote device.

Based on the foregoing technical solution, when the first remote device is the intermediate device that is in the at least two remote devices and that is cascaded to the control device, the control device may further transmit the second optical signal to another remote device via the first remote device, and wake up the another remote device based on the parameter corresponding to the second optical signal, to flexibly control different remote devices in a cascading scenario.

In a possible implementation of the second aspect, that the first remote device transmits the second optical signal to the second remote device includes: After waking up the first remote device, the first remote device transmits the second optical signal to the second remote device.

Based on the foregoing technical solution, after determining that the first remote device is woken up, the control device transmits the second optical signal to the second remote device via the first remote device, so that the first remote device identifies the second optical signal after being woken up, and transmits the second optical signal to the second remote device when determining that a receiver of the second optical signal indicates the second remote device. In other words, before the first remote device is woken up, the first remote device may power off (or sleep) a component corresponding to a communication link between the first remote device and the second remote device (and a component configured to identify the second optical signal), to expect to further improve the energy-saving effect of the first remote device.

Optionally, a process in which the control device transmits the second optical signal to the second remote device via the first remote device does not need to depend on waking up the first remote device. For example, when the first remote device is in energy-saving mode, the first remote device may maintain the component corresponding to the communication link between the first remote device and the second remote device (and the component configured to identify the second optical signal) in power-on state, and support forwarding of the second optical signal before the first remote device is woken up, so that the control device flexibly controls a wake-up process of each remote device.

In a possible implementation of the second aspect, the first remote device is an endpoint device that is in the at least two remote devices and that is cascaded to the control device; and the first remote device receives the first optical signal via a third remote device.

Based on the foregoing technical solution, when the first remote device is the endpoint device that is in the at least two remote devices and that is cascaded to the control device, the control device may transmit the first optical signal to the first remote device via another remote device (for example, the third remote device), so that the control device flexibly controls the wake-up process of each remote device.

In a possible implementation of the second aspect, the method further includes: The first remote device receives indication information from the control device, where the indication information indicates the first remote device to enter the energy-saving mode.

Optionally, the indication information may further indicate other information, for example, at least one of a start moment at which the first remote device enters the energy-saving mode, an end moment at which the first remote device enters the energy-saving mode, and duration for which the first remote device enters the energy-saving mode.

Optionally, after the first remote device enters the energy-saving mode based on the indication information (or after the first remote device determines that the first remote device has entered the energy-saving mode, after the first remote device determines to enter the energy-saving mode, or at a moment before entering the energy-saving mode), the first remote device may further transmit a response to the control device, to indicate, by using the response, that the first remote device has entered (or is to enter) the energy-saving mode.

Optionally, the first remote device may alternatively determine, in another manner, to enter the energy-saving mode. For example, the first remote device determines, in a manner of manual configuration by operation and maintenance personnel (or a manner of pre-configuration before delivery), to enter the energy-saving mode in a specific time period.

A third aspect of this application provides a communication apparatus. The communication apparatus may implement the method according to any one of the first aspect or the possible implementations of the first aspect. The communication apparatus includes a corresponding unit or module configured to perform the method. The unit or module included in the communication apparatus may be implemented by using software and/or hardware. For example, the apparatus may be a control device, the apparatus may be a component (for example, a processor, a chip, or a chip system) in a control device, or the apparatus may be a logic module or software that can implement all or a part of functions of a control device.

The communication apparatus includes a processing unit and a transceiver unit. The processing unit is configured to determine a first optical signal, where a parameter corresponding to the first optical signal is for waking up a first remote device. The transceiver unit is configured to transmit the first optical signal to the first remote device.

In a possible implementation of the third aspect, the parameter corresponding to the first optical signal includes at least one of the following: optical signal strength or LOS detection.

In a possible implementation of the third aspect, that a parameter corresponding to the first optical signal is for waking up a first remote device includes: When the parameter corresponding to the first optical signal includes the optical signal strength, the optical signal strength is represented as N bits; and when a value of the N bits is a first value, the first optical signal is for waking up the first remote device, where N is a positive integer.

In a possible implementation of the third aspect, the first optical signal is a periodic signal.

In a possible implementation of the third aspect, the first remote device is included in at least two remote devices, and the at least two remote devices are cascaded to the control device.

In a possible implementation of the third aspect, the first remote device is an intermediate device that is in the at least two remote devices and that is cascaded to the control device, and the transceiver unit is further configured to transmit a second optical signal to a second remote device via the first remote device, where a parameter corresponding to the second optical signal is for waking up the second remote device.

In a possible implementation of the third aspect, after the processing unit determines that the first remote device is woken up, the transceiver unit transmits the second optical signal to the second remote device via the first remote device.

In a possible implementation of the third aspect, the first remote device is an endpoint device that is in the at least two remote devices and that is cascaded to the control device; and the transceiver unit is specifically configured to transmit the first optical signal to the first remote device via the third remote device.

A fourth aspect of this application provides a communication apparatus. The communication apparatus may implement the method according to any one of the second aspect or the possible implementations of the second aspect. The communication apparatus includes a corresponding unit or module configured to perform the method. The unit or module included in the communication apparatus may be implemented by using software and/or hardware. For example, the apparatus may be a first remote device, the apparatus may be a component (for example, a processor, a chip, or a chip system) in a first remote device, or the apparatus may be a logic module or software that can implement all or a part of functions of a first remote device.

The communication apparatus includes a processing unit and a transceiver unit. The transceiver unit is configured to receive a first optical signal. The processing unit is configured to wake up the first remote device based on a parameter corresponding to the first optical signal.

In a possible implementation of the fourth aspect, the parameter corresponding to the first optical signal includes at least one of the following: optical signal strength or LOS detection.

In a possible implementation of the fourth aspect, the first remote device is in energy-saving mode, and P modules in the first remote device are in power-off state, where P is a positive integer, where the P modules include at least one of the following: a first module, configured to process a radio signal; a second module, configured to supply power to the first module; a third module, configured to transmit an optical signal; and a fourth module, configured to supply power to the third module.

In a possible implementation of the fourth aspect, the module configured to process the radio signal includes at least one of the following: a main central processing unit CPU, an intermediate frequency application-specific integrated circuit ASIC, or a radio frequency unit.

In a possible implementation of the fourth aspect, the first remote device is in energy-saving mode, and Q modules in the first remote device are in power-on state, where Q is a positive integer, where the Q modules include at least one of the following: a fifth module, configured to receive an optical signal; a sixth module, configured to supply power to the fifth module; a seventh module, configured to identify a parameter corresponding to the optical signal; and an eighth module, configured to supply power to the seventh module.

In a possible implementation of the fourth aspect, the seventh module is integrated into the fifth module; or the seventh module is integrated into the eighth module.

In a possible implementation of the fourth aspect, that the parameter corresponding to the first optical signal is for waking up the first remote device includes: When the parameter corresponding to the first optical signal includes the optical signal strength, the optical signal strength is represented as N bits; and when a value of the N bits is a first value, the first optical signal is for waking up the first remote device, where N is a positive integer.

In a possible implementation of the fourth aspect, the first optical signal is a periodic signal.

In a possible implementation of the fourth aspect, the first remote device is included in at least two remote devices, and the at least two remote devices are cascaded to a control device.

In a possible implementation of the fourth aspect, the first remote device is an intermediate device that is in the at least two remote devices and that is cascaded to the control device, and the transceiver unit is further configured to receive a second optical signal, where a parameter corresponding to the second optical signal is for waking up a second remote device; and the transceiver unit is further configured to transmit the second optical signal to the second remote device.

In a possible implementation of the fourth aspect, after the processing unit wakes up the first remote device, the transceiver unit transmits the second optical signal to the second remote device.

In a possible implementation of the fourth aspect, the first remote device is an endpoint device that is in the at least two remote devices and that is cascaded to the control device; and the transceiver unit is specifically configured to receive the first optical signal via a third remote device.

A fifth aspect of this application provides a communication apparatus, including at least one processor. The at least one processor is coupled to a memory. The processor is configured to perform the method according to any one of the first aspect or the possible implementations of the first aspect.

For example, the memory is configured to store a program or instructions. The at least one processor is configured to execute the program or the instructions, so that the apparatus implements the method according to any one of the first aspect or the possible implementations of the first aspect.

A sixth aspect of this application provides a communication apparatus, including at least one processor. The at least one processor is coupled to a memory. The processor is configured to perform the method according to any one of the second aspect or the possible implementations of the second aspect.

For example, the memory is configured to store a program or instructions. The at least one processor is configured to execute the program or the instructions, so that the apparatus implements the method according to any one of the second aspect or the possible implementations of the second aspect.

A seventh aspect of this application provides a communication apparatus, including at least one logic circuit and an input/output interface. The logic circuit is configured to perform the method according to any one of the first aspect or the possible implementations of the first aspect.

An eighth aspect of this application provides a communication apparatus, including at least one logic circuit and an input/output interface. The logic circuit is configured to perform the method according to any one of the second aspect or the possible implementations of the second aspect.

A ninth aspect of this application provides a computer-readable storage medium. The computer-readable storage medium is configured to store one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

A tenth aspect of this application provides a computer program product (which is also referred to as a computer program). When the computer program product is executed by the processor, the processor performs the method according to any one of the first aspect or the possible implementations of the first aspect, or the processor performs the method according to any one of the second aspect or the possible implementations of the second aspect.

An eleventh aspect of this application provides a chip system. The chip system includes at least one processor, configured to support a communication apparatus in implementing a function in any one of the first aspect or the possible implementations of the first aspect, or configured to support the communication apparatus in implementing a function in any one of the second aspect or the possible implementations of the second aspect.

In a possible design, the chip system may further include a memory. The memory is configured to store program instructions and data that are necessary for the communication apparatus. The chip system may include a chip, or may include the chip and another discrete component. Optionally, the chip system further includes an interface circuit. The interface circuit provides program instructions and/or data for the at least one processor.

A twelfth aspect of this application provides a communication system. The communication system includes the communication apparatus in the third aspect and the communication apparatus in the fourth aspect, the communication system includes the communication apparatus in the fifth aspect and the communication apparatus in the sixth aspect, or the communication system includes the communication apparatus in the seventh aspect and the communication apparatus in the eighth aspect.

For the technical effects brought by any one of the design manners of the third aspect to the twelfth aspect, refer to the technical effects brought by the first aspect or the second aspect and different design manners of the first aspect or the second aspect. Details are not described herein again.

### BRIEF DESCRIPTION OF DRAWINGS

FIG. 1 to FIG. 6 are some diagrams of application scenarios according to this application;
FIG. 7 is a diagram of a signal processing method according to this application;
FIG. 8 to FIG. 11 are some diagrams of application scenarios according to this application; and
FIG. 12 to FIG. 14 are some diagrams of communication apparatuses according to this application.

### DESCRIPTION OF EMBODIMENTS

The following describes technical solutions in this application with reference to accompanying drawings in this application. All other solutions obtained by a person skilled in the art based on this application without creative efforts shall fall within the protection scope of this application.

Some terms in this application are first explained and described, to help a person skilled in the art have a better understanding.
(1) A terminal device may be a wireless terminal device that can receive scheduling and indication information of a network device. The wireless terminal device may be a device that provides a user with voice and/or data connectivity, a handheld device with a wireless connection function, or another processing device connected to a wireless modem.
   The terminal device may communicate with one or more core networks or an internet through a radio access network (radio access network, RAN). The terminal device may also be referred to as a terminal, user equipment (user equipment, UE), a mobile station, a mobile terminal, or the like. The terminal device may be widely used in various scenarios such as device-to-device (device-to-device, D2D), vehicle to everything (vehicle to everything, V2X) communication, machine type communication (machine type communication, MTC), an internet of things (internet of things, IoT), ultra-reliable low-latency communication (ultra-reliable low-latency communication, URLLC), virtual reality, augmented reality, industrial control, automatic driving, telemedicine, a smart grid, smart furniture, smart office, smart wearables, smart transportation, a smart city, or satellite communication. The terminal may be a mobile phone, a tablet computer, a computer having a wireless transceiver function, a wearable device, a vehicle, an uncrewed aerial vehicle, a helicopter, an airplane, a hot air balloon, a ship, a robot, a robotic arm, a smart home device, or the like. A device form of the terminal is not limited in embodiments of this application.
(2) The network device may be a device in a wireless network. For example, the network device may be a radio access network (radio access network, RAN) node (or device) that connects the terminal device to the wireless network.

In some implementations, the network device may further include a satellite, an aircraft, and the like.

In addition, in another possible case, the network device may be another apparatus that provides a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be the network device, or may be an apparatus, for example, a processor, a circuit, a chip, or a chip system, that can support the network device in implementing the function. The apparatus may be installed in the network device or used in connection with the network device. In the technical solutions provided in this application, an example in which the apparatus configured to implement the function of the network device is the network device is used to describe the technical solutions provided in this application.

In this application, an apparatus configured to implement a function of the terminal device may be the terminal device, or may be an apparatus, for example, a processor, a circuit, a chip, or a chip system, that can support the terminal device in implementing the function. The apparatus may be installed in the terminal device or used in connection with the terminal device. In the technical solutions provided in this application, an example in which the apparatus configured to implement the function of the terminal device is the terminal device is used to describe the technical solutions provided in this application.

(3) The terms "system" and "network" in this application may be used interchangeably. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of the items, and includes a singular item or any combination of plural items. For example, "at least one of A, B, and C" includes A, B, C, AB, AC, BC, or ABC. In addition, unless otherwise stated, ordinal numbers such as "first" and "second" in this application are for distinguishing between a plurality of objects, but are not for limiting an order, a time sequence, priorities, or importance of the plurality of objects.

This application may be applied to various possible communication systems. For example, this application may be applied to a long term evolution (long term evolution, LTE) system, a new radio (new radio, NR) system, an open radio access network (open RAN, O-RAN or ORAN), a cloud radio access network (cloud radio access network, CRAN), or a new radio vehicle to everything (NR vehicle to everything, NR V2X) system. Alternatively, this application may be applied to a system with hybrid networking of a plurality of access technologies (for example, LTE and 5G). Alternatively, this application may be applied to a device-to-device (device-to-device, D2D) communication system, a machine to machine (machine to machine, M2M) communication system, the internet of things (Internet of Things, IoT), or an uncrewed aerial vehicle communication system. Alternatively, this application may be applied to a nonterrestrial communication system, for example, a satellite communication system or a high-altitude communication platform.

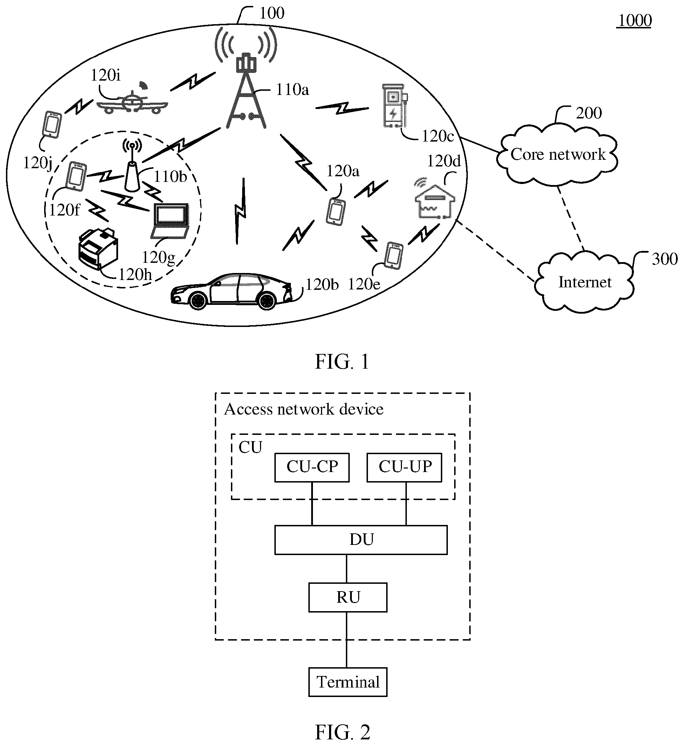

FIG. 1 is a diagram of a possible and non-limiting application scenario according to this application. The solutions provided in this application may be applied to a communication system 1000 shown in FIG. 1. As shown in FIG. 1, the communication system 1000 includes a radio access network (radio access network, RAN) 100 and a core network 200. The RAN 100 may include at least one RAN device (for example, 110a and 110b in FIG. 1, collectively referred to as 110). The RAN 100 may further include at least one terminal (for example, 120a to 120j in FIG. 1, collectively referred to as 120). The terminals 120a to 120j are connected to the RAN devices 110 in a wireless manner. The RAN 100 may further include other RAN devices such as a wireless relay device and/or a wireless backhaul device (not shown in FIG. 1). The access network devices 110 are connected to the core network 200 in a wireless or wired manner. A core network device in the core network and the access network device in the radio access network may be different physical devices, or may be a same physical device that integrates a logical function of the core network and a logical function of the radio access network. This is not limited. The terminals may be connected to each other in a wireless manner. The access network devices may be connected to each other in a wired or wireless manner. FIG. 1 is merely a diagram. The communication system may further include another network device, for example, a wireless relay device and/or a wireless backhaul device (not shown in FIG. 1).

For example, in FIG. 1, the RAN 100 may be configured as a cellular system related to the 3rd generation partnership project (3rd generation partnership project, 3GPP). For example, the RAN 100 may be configured as a 4th generation (4th generation, 4G) mobile communication system, a 5th generation (5th generation, 5G) mobile communication system, or a future-oriented evolved system (for example, a 6G mobile communication system). Alternatively, the RAN 100 may be an open radio access network (open RAN, O-RAN or ORAN) or a cloud radio access network (cloud radio access network, CRAN). Alternatively, the RAN 100 may be a communication system that integrates the foregoing two or more systems.

The RAN device 110 may also be sometimes referred to as a RAN node, a RAN entity, an access node, or the like, constitutes a part of the communication system, and is configured to help the terminal implement radio access. The plurality of RAN nodes 110 in the communication system 1000 may be a same category of nodes, or may be different categories of nodes. In some scenarios, roles of the RAN node 110 and the terminal 120 are relative. For example, the network element 120i in FIG. 1 may be a helicopter or an uncrewed aerial vehicle, and may be configured as a mobile base station. For terminals 120j that access the RAN 100 via the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, an access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, an access node in a base station in a future mobile communication system, or the like. The access network device may be a macro base station (for example, 110a in FIG. 1), a micro base station or an indoor station (for example, 110b in FIG. 1), a relay node or a donor node, or a radio controller in a CRAN scenario. Optionally, the access network device may alternatively be a server, a wearable device, a vehicle-mounted device, or the like. For example, an access network device in a vehicle to everything (vehicle to everything, V2X) technology may be a road side unit (road side unit, RSU). A plurality of access network devices in A communication system may be a same category of base stations, or may be different categories of base stations. The base station may communicate with a terminal, or may communicate with the terminal via a relay station. The terminal may communicate with a plurality of base stations in different access technologies.

In another possible scenario, a plurality of RAN nodes coordinate to assist a terminal in implementing radio access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio equipment or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module. The CU (or the CU-CP and the CU-UP), the DU, and the RU can implement different protocol layer functions.

Communication between the access network device and a terminal device may comply with a specific protocol layer structure. A protocol layer may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

In an implementation example, as shown in FIG. 2, an access network device may include at least one CU and at least one DU. This design may be referred to as CU and DU separation. One CU may be connected to one or more DUs. The CU and the DU may be obtained through division based on protocol layers of a wireless network. For example, functions of a PDCP layer and protocol layers (for example, an RRC layer and an SDAP layer) above the PDCP layer are set on the CU, and functions of protocol layers (for example, an RLC layer, a MAC layer, and a PHY layer) below the PDCP layer are set on the DU. For another example, functions of protocol layers above a PDCP layer are set on the CU, and functions of the PDCP layer and protocol layers below the PDCP layer are set on the DU. This is not limited. When the CU includes a CU-CP and a CU-UP, the CU-CP may be configured to implement a control plane function of the CU, and the CU-UP may be configured to implement a user plane function of the CU. For example, when the CU is configured to implement functions of the PDCP layer, the RRC layer, and the SDAP layer, the CU-CP is configured to implement a function of the RRC layer and a control plane function of the PDCP layer, and the CU-UP is configured to implement a function of the SDAP layer and a user plane function of the PDCP layer. Names of the CU and the DU are not limited in this application. For example, the CU may be referred to as a first access network element, and the DU may be referred to as a second access network element.

The division of processing functions of the CU and the DU based on the protocol layers is merely an example. Division may alternatively be performed in another manner. For example, the CU or the DU may have functions of more protocol layers through division, or the CU or the DU may have a part of processing functions of protocol layers through division. For example, a part of functions of the RLC layer and a function of a protocol layer above the RLC layer are set on the CU, and a remaining function of the RLC layer and a function of a protocol layer below the RLC layer are set on the DU. For another example, functions of the CU or the DU may be divided based on a service category or another system requirement, for example, based on latency. Functions whose processing time needs to satisfy a low-latency requirement are set on the DU, and functions whose processing time does not need to satisfy the latency requirement are set on the CU.

The CU may be connected to a core network. Optionally, the CU may have a part of functions of the core network.

Further, a part of functions of the DU may be disposed separately. As shown in FIG. 2, the part of functions may be implemented by a radio unit (radio unit, RU). The RU may have a radio function. A name of the RU is not limited in this application. For example, the RU may be referred to as a third access network element. The DU and the RU may be split or separated at the PHY layer. For example, the DU may implement a higher-layer function of the PHY layer, and the RU may implement a lower-layer function of the PHY layer or implement the lower-layer function and the radio function. The higher-layer function of the PHY layer includes a function closer to the MAC layer, and the lower-layer function of the PHY layer includes a function closer to radio. For example, the higher-layer function of the PHY layer includes one or more of the following: forward error correction (forward error correction, FEC) encoding/decoding, scrambling, or modulation/demodulation. The lower-layer function of the PHY layer includes one or more of the following: fast Fourier transform (fast Fourier transform, FFT) transform/inverse fast Fourier transform (inverse fast Fourier transformation, iFFT) transform, beamforming, extraction and filtering of a physical random access channel (physical random access channel, PRACH), or the like. The RU may perform radio signal communication with a terminal device through an air interface. A precoding function of the PHY layer may be located in the DU or the RU. Manners of splitting the DU and the RU may be various possible manners. This is not limited.

There is an interface between the DU and the RU. For example, according to different splitting manners, the interface between the DU and the RU may be a common public radio interface (common public radio interface, CPRI) interface or an enhanced common public radio interface (enhanced common public radio interface, eCPRI) interface.

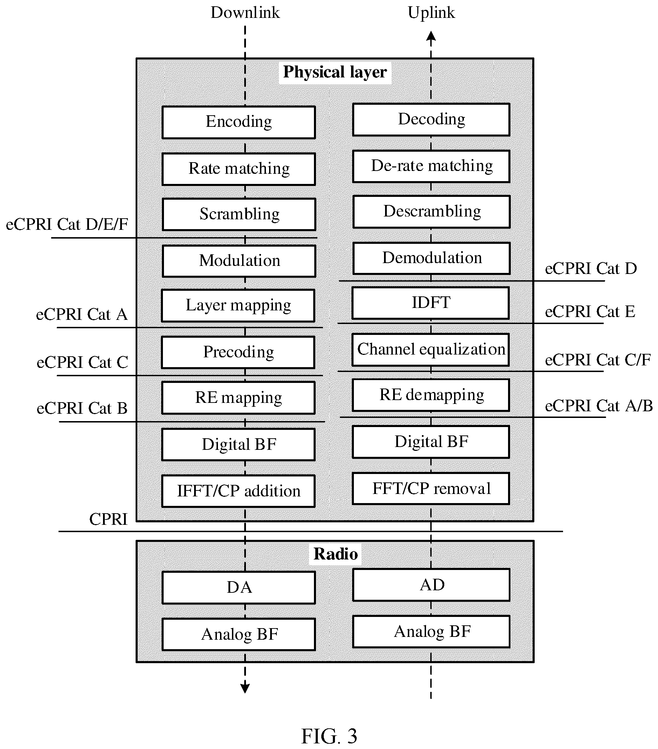

FIG. 3 is a diagram of an architecture of an access network device. The access network device includes one or more functional modules, configured to implement signal processing. As shown in FIG. 3, a physical layer function is used as an example. The access network device includes one or more of the following functions: encoding, rate matching, scrambling, modulation, layer mapping, precoding, resource element (resource element, RE) mapping, digital beamforming (beamforming, BF), inverse fast Fourier transform (inverse fast fourier transformation, IFFT)/cyclic prefix (cyclic prefix, CP) addition, decoding, de-rate matching, descrambling, demodulation, inverse discrete Fourier transform (inverse discrete fourier transformation, IDFT), channel equalization (or channel estimation), RE demapping, digital BF, fast Fourier transform (fast Fourier transform, FFT)/CP removal, digital to analog (digital to analog, DA) conversion, analog BF, analog to digital (analog to digital, AD) conversion, or analog BF.

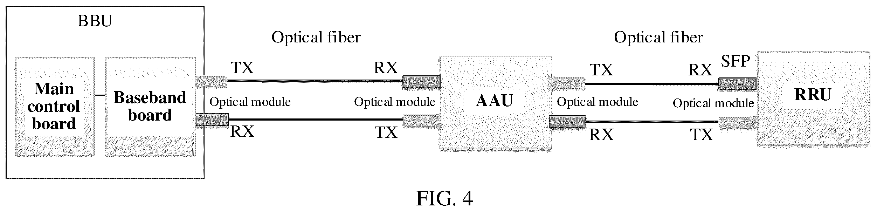

The one or more functional modules may be implemented by using software, hardware, or a combination of the software and the hardware. Physically, the functional modules may be discrete or integrated. It may be understood that the foregoing functional modules are merely examples. The access network device may include more other modules (for example, a scheduling module, a power control module, a hybrid automatic repeat request (hybrid automatic repeat request, HARQ) module, a flow control module, a mobility management module, or an artificial intelligence (artificial intelligence, AI) module) based on a design, or do not include a functional module shown in FIG. 4 (for example, do not include a digital BF module). The access network device further includes a fronthaul (fronthaul, FH) interface between the DU and the RU, to implement communication between the DU and the RU. The fronthaul interface includes but is not limited to the CPRI or the eCPRI. In a possible implementation, the DU is located in the BBU, the RU is located in the RRU/AAU/RRH, and an interface between the BBU and the RRU/AAU/RRH may also be referred to as the fronthaul interface. To implement the fronthaul interface, the BBU and the RRU/AAU/RRH may be connected through a fronthaul network, or the DU and the RU may be connected through the fronthaul network. For example, the fronthaul network includes but is not limited to a fiber direct connection and a wavelength division network.

The access network device may support one or more categories of fronthaul interfaces, and different fronthaul interfaces respectively correspond to DUs and RUs having different functions. As shown in FIG. 4, if the fronthaul interface between the DU and the RU is the CPRI, the DU is configured to implement one or more of baseband functions, and the RU is configured to implement one or more of radio functions. If the fronthaul interface between the DU and the RU is the eCPRI, in comparison with the CPRI, a part of downlink and/or uplink baseband functions are moved from the DU to the RU for implementation. Different manners of splitting the DU and the RU correspond to different categories (categories, Cat for short) of eCPRIs. FIG. 3 shows six eCPRI examples, which are represented by using Cat A, B, C, D, E, and F (which may also be represented as Option A to F, Option 1 to 6, or in another manner). It may be understood that there may further be another splitting manner between the DU and the RU, that is, there may further be another category of eCPRI.

The eCPRI Cat A is used as an example. For downlink transmission, splitting is performed by using the layer mapping as a splitting point. The DU is configured to implement one or more functions in the layer mapping and functions before the layer mapping (that is, one or more of the encoding, the rate matching, the scrambling, the modulation, and the layer mapping), and another function (for example, the RE mapping, the digital BF, or the IFFT/CP addition) after the layer mapping is moved to the RU for implementation. For uplink transmission, splitting is performed by using the RE demapping as a splitting point. The DU is configured to implement one or more functions in the demapping and functions before the demapping (that is, one or more of the decoding, the de-rate matching, the descrambling, the demodulation, the IDFT, the channel equalization, and the RE demapping), and another function (for example, one or more of the digital BF or the FFT/CP removal) after the demapping is moved to the RU for implementation.

Similarly, the eCPRIs Cat B, Cat C, Cat D, Cat E, and Cat F respectively correspond to different manners of splitting the DU and RU. A split point and a function before the split point are implemented by the DU, and a function after the split point is implemented by the RU. For split points of various categories of eCPRIs, refer to FIG. 4. Details are not described one by one again. For example, for the eCPRI Cat B, the RE mapping is used as a splitting point of downlink transmission, and the RE demapping is used as a splitting point of uplink transmission. For the uplink transmission, the RE mapping and functions before the RE mapping are implemented by the DU, and functions after the RE mapping and the radio function are implemented by the RU. For the downlink transmission, the RE demapping and functions before the RE demapping are implemented by the DU, and function after the RE demapping and the radio function are implemented by the RU.

Splitting manners for eCPRIs may be symmetric for an uplink and a downlink, for example, the eCPRIs Cat B and Cat C shown in FIG. 3. Alternatively, splitting manners for eCPRIs may be asymmetric for an uplink and a downlink, for example, the eCPRIs Cat A, Cat D, Cat E, and Cat F shown in FIG. 3. This is not limited. Optionally, for the uplink and/or the downlink, different split manners may be configured, that is, different categories of eCPRIs are configured, for different channels or different channel groups. One group of channels may include one or more channels.

In a possible design, the DU is located in the BBU, the RU is located in the RRU/AAU/RRH, a processing unit configured to implement a baseband function in the BBU is referred to as a base band high (base band high, BBH) layer unit, and a processing unit configured to implement the baseband function in the RRU/AAU/RRH is referred to as a base band low (base band low, BBL) layer unit.

In recent years, energy saving has become a theme of the era. For a network device (for example, the network device may be the RAN node in FIG. 1 or FIG. 2, or the functional module in FIG. 3), how to perform energy saving and emission reduction without reducing customer experience as much as possible becomes a hot topic discussed by an equipment vendor and an operator.

To implement energy saving, the network device may run an energy-saving mode (which is also referred to as a deep sleep mode, a sleep mode, a low power consumption mode, a standby mode, or the like) based on control of a remote network management device. When running the energy-saving mode, the network device shuts down a part or all of functions, to implement energy saving. The network management device may also be referred to as a control device. The following describes, by using scenarios shown in FIG. 4 to FIG. 6, an example of an implementation process of the energy-saving mode when the network device is a distributed base station.

As shown in FIG. 4, the distributed base station includes a baseband unit (using a BBU as an example) and one or more radio modules (using an AAU/RRU as an example) connected to the baseband unit. The BBU and the AAU/RRU may be connected to each other through an optical signal transmission link, for example, through an optical fiber. In addition, the BBU and the AAU/RRU may communicate with each other via an optical module (for example, the optical module may be a small form-factor pluggable (small form-factor pluggable, SFP) in the figure). The optical module includes a sub-module configured to transmit (transmit, TX) an optical signal and a sub-module configured to receive (receive, RX) an optical signal. In addition, the optical module may be further configured to perform optical to electrical conversion. For example, the optical module may convert an electrical signal from a processing module (for example, a chip or a processor) into an optical signal for transmission on the optical fiber. For another example, the optical module may convert an optical signal received from the optical fiber into an electrical signal for processing performed by a processing module.

For the distributed base station shown in FIG. 4, when the BBU and the AAU/RRU are connected to each other through the optical fiber or another possible communication medium, the AAU/RRU may be referred to as a remote radio module, a remote device, a remote module, or the like. If the BBU can control the AAU/RRU, the BBU may also be referred to as a control device, a control module, or the like. Optionally, a control device of the AAU/RRU may alternatively be a third-party device. This is not limited. For example, the control device is another control device disposed independent of the BBU and the AAU/RRU. In embodiments of this application, the BBU and the AAU/RRU are different hardware devices, software modules, or a combination of a hardware device and a software module that are disposed separately or in a distributed manner, and an actual distance between the BBU and the AAU/RRU is not limited. For example, the BBU and the AAU/RRU are independent hardware devices connected through the optical fiber, or the BBU and the AAU/RRU are different software modules that can be loaded on a same device or a same group of devices. This is not limited.

Optionally, the BBU includes a main control board and a baseband board. The main control board is mainly configured to control and manage another board in a system. In addition, the control board may further control and manage the baseband board, and transmit a service upstream to a board of an upper-layer device. The baseband board (which is also referred to as a baseband processing unit) mainly completes baseband processing (for example, channel encoding and decoding, or modulation and demodulation, where for details, refer to the related descriptions in FIG. 3.) of a signal. In addition, the baseband board may further provide transmission management and an interface, to manage a radio resource, provide a clock signal, and so on.

The distributed base station shown in FIG. 4 is used as an example. To implement energy saving, in a period of light traffic, the distributed base station is expected to enter the energy-saving mode (or the deep sleep mode), to obtain a better energy efficiency gain.

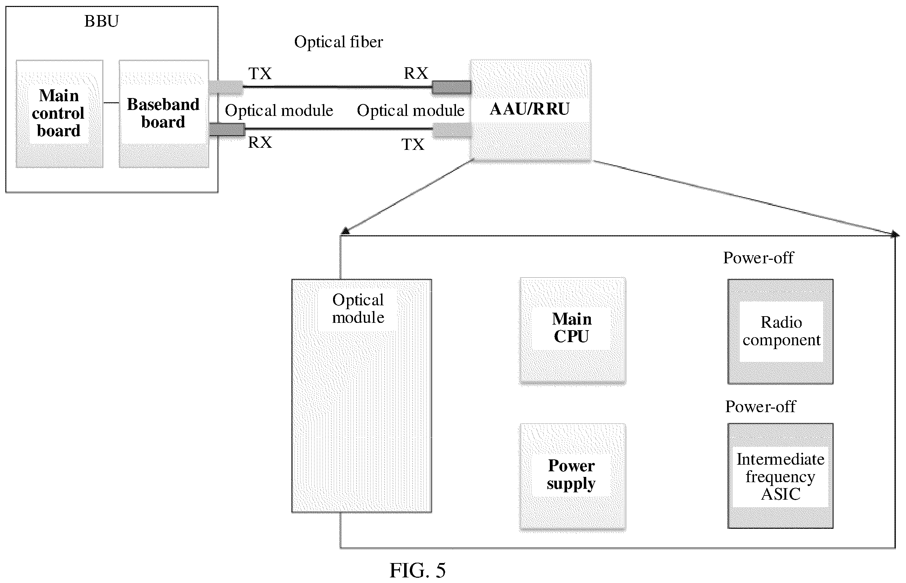

A possible energy-saving manner of the remote device is shown in FIG. 5. Radio service components (that is, a radio component, an intermediate frequency ASIC, and the like in FIG. 5) are powered off, but a CPU and an optical module that are in the remote device are kept alive (that is, are kept powered on or are not powered off). In FIG. 5, the optical module is mainly configured to receive the optical signal on the optical fiber or transmit the optical signal. Because a communication link between the remote device and the BBU is in a keepalive state, the BBU may wake up the remote device at any time by using a message. The main CPU in the remote device is mainly configured to manage and control a component or a module in the AAU/RRU, for example, may control an operating status of each component, for example, power off or power on the component. The intermediate frequency ASIC/radio component is mainly configured to complete intermediate radio processing of a radio frequency unit.

As shown in FIG. 5, when the base station enters the energy-saving/sleep mode, the main control board and the baseband board that are in the BBU, and the optical module, a power supply, and a main CPU that are in the AAU/RRU are all in power consumption running mode, and a basic communication maintenance link between the AAU and the BBU is maintained. Service-related component/devices (for example, the radio component and an intermediate frequency ASIC in the figure) in the AAU/RRU enter an energy-saving/power-off state. When a device needs to provide a service again, the BBU wakes up the AAU/RRU by using a message.

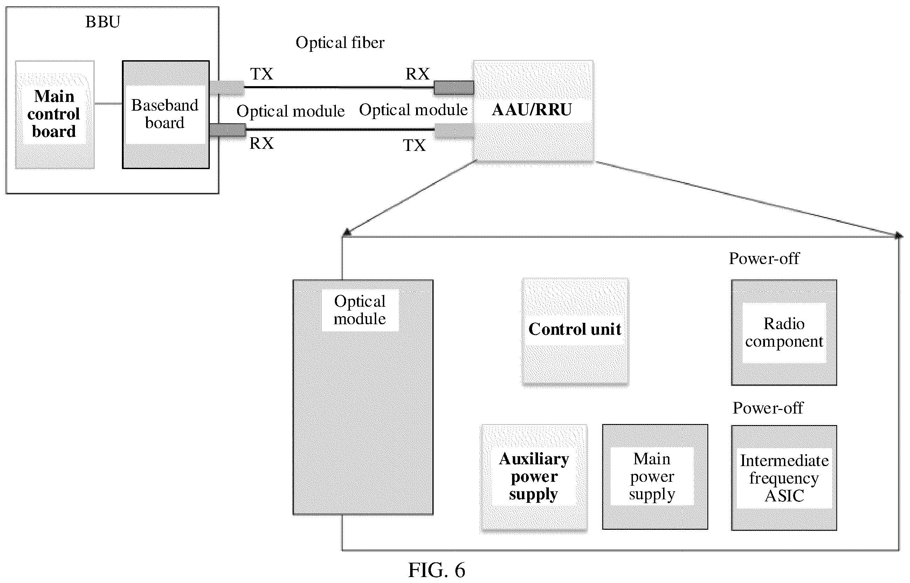

Another possible energy-saving manner is shown in FIG. 6. A sleep-mode entering moment and a sleep-mode exiting moment are configured (or agreed on). At the sleep-mode entering moment, the AAU/RRU enters the energy-saving mode. At the sleep-mode exiting moment, the AAU/RRU is woken up.

As shown in FIG. 6, the BBU determines a predetermined time period of entering the energy-saving/sleeping mode, and the BBU transmits indication information of the time period to the remote device like the AAU/RRU. At a start moment of the predetermined time period, the main control board in the BBU, an auxiliary power supply in the AAU/RRU (configured to supply power to a module like a control unit in an energy-saving state), and the control unit (for example, a CPU) in the AAU/RRU are all in a power consumption running mode; and other components (for example, the optical module, a main power supply, a radio component, and an intermediate frequency ASIC that are in the AAU/RRU) enter a power-off state. In this energy-saving period, because the optical module is powered off, communication between the AAU/RRU and the BBU is not kept alive. That is, the AAU/RRU and the BBU cannot communicate with each other. At an end moment of the predetermined time period, the control unit in the AAU/RRU wakes up this device. In this case, the optical module, the main power supply, the radio component, the intermediate frequency ASIC, and the like are powered on.

However, in the foregoing energy-saving implementation process, some problems still exist. For example, in the energy-saving process shown in FIG. 5, a bidirectional communication capability between the BBU and the AAU (or between the BBU and the RRU) is kept alive, standby power consumption is still high, and it is difficult for a device to enter a standby mode having an extremely low power consumption level (for example, a milliwatt level). For another example, in the energy-saving process shown in FIG. 6, because the optical module is powered off, basic communication between the AAU and the BBU cannot be maintained, and the remote device AAU/RRU cannot be woken up at any time to provide a service.

To resolve the foregoing problem, this application provides a communication method and a related device, to wake up a remote device based on a parameter corresponding to an optical signal, so that overheads of parsing a wake-up indication by the remote device can be reduced. In addition, when the remote device does not continuously keep alive a communication link for bidirectional communication between the remote device and a control device, the remote device can still be woken up at any time, so that the remote device in energy-saving mode can power off more components, to expect to improve an energy-saving effect. The following provides descriptions with reference to accompanying drawings.

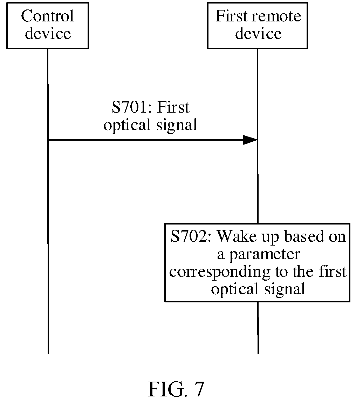

FIG. 7 is a diagram of a communication method according to this application. The method includes the following steps.

S701: A control device transmits a first optical signal.

S702: A first remote device wakes up based on a parameter corresponding to the first optical signal.

In a possible implementation, the parameter corresponding to the first optical signal sent by the control device in step S701 includes at least one of the following: optical signal strength or loss of signal (loss of signal, LOS) detection.

It should be understood that the optical signal strength may refer to an optical signal power value. For example, the optical signal strength is for waking up the first remote device when a power value of the first optical signal is a specific value (the optical signal power value is within a preset range). Particularly, when the specific value is 0 (or the preset range is being greater than 0), the optical signal strength may alternatively be expressed as whether there is an optical signal, whether there is an optical power, whether there is a flash, or the like.

Optionally, when the parameter corresponding to the first optical signal includes the optical signal strength, after the first remote device receives the first optical signal, waking up of the first remote device may be triggered when the first remote device determines that the value of the optical signal strength of the first optical signal is a preset value (or within the preset range).

Optionally, when the parameter corresponding to the first optical signal includes the LOS detection, after the first remote device receives the first optical signal, waking up of the first remote device may be triggered when the first remote device determines that a LOS signal occurs (or no LOS signal occurs) for the first optical signal.

In an implementation example, the LOS signal may be a LOS alarm signal that is determined, when a receiving end in a communication system receives no signal transmitted by a transmitting end, to occur. In other words, when the first remote device determines, on a communication link between the first remote device and the control device, that no optical signal from the control device is received, the first remote device determines that the LOS signal occurs for the first optical signal, so that waking up of the first remote device is triggered; or when the first remote device determines, on a communication link between the first remote device and the control device, that the optical signal from the control device is received, the first remote device determines that no LOS signal occurs for the first optical signal, so that waking up of the first remote device is triggered.

In another implementation example, the LOS signal may be a LOS alarm signal that is determined, when a power of an optical signal received by a receiving end in a communication system is continuously lower than a specified threshold within predetermined duration (for example, 5 microseconds (µs) or 10 µs), to occur. In other words, when the first remote device determines, on a communication link between the first remote device and the control device, that the optical signal received from the control device within the predetermined duration is continuously less than the predetermined threshold, the first remote device determines that the LOS signal occurs for the first optical signal, so that waking up of the first remote device is triggered; or when the first remote device determines, on a communication link between the first remote device and the control device, that the optical signal received from the control device within the predetermined duration is not continuously lower than the predetermined threshold, the first remote device determines that no LOS signal occurs for the first optical signal, so that waking up of the first remote device is triggered.

Optionally, when the parameter corresponding to the first optical signal includes the optical signal strength and the LOS detection, after the first remote device receives the first optical signal, waking up of the first remote device may be triggered when the first remote device determines that the value of the optical signal strength of the first optical signal is a preset value (or within the preset range) and that a LOS signal occurs (or no LOS signal occurs) for the first optical signal.

It should be noted that, the parameter corresponding to the first optical signal may alternatively be implemented in another manner in addition to the foregoing implementations. For example, the parameter corresponding to the first optical signal may include optical signal energy magnitude, duration of a continuous optical signal, or another parameter corresponding to the optical signal. This is not limited herein.

In a possible implementation, when the parameter corresponding to the first optical signal includes the optical signal strength, the optical signal strength may be represented as N bits; and when a value of the N bits is a first value, the first optical signal is for waking up the first remote device, where N is a positive integer. Therefore, when the parameter corresponding to the first optical signal includes the optical signal strength, after the first remote device receives the first optical signal, the first remote device may represent the received first optical signal as the N bits, and determine to wake up the first remote device when the value of the N bits is the first value, so that the first remote device is flexibly controlled, based on the value of the N bits, to perform corresponding behavior.

Optionally, when the value of the N bits is a value other than the first value, the control device may indicate, based on the another value, the first remote device to perform another behavior, for example, indicate the first remote device to align clock information, indicate the first remote device to transmit related information (for example, an operating voltage and an operating current) of one or more power supplies, or perform another implementation. This is not limited herein.

Optionally, the N bits include at least two parts of bits. For example, a first part of bits may be denoted as N1 bits, and a second part of bits may be denoted as N2 bits, where the N1 bits indicate a target remote device that is to be woken up (for example, a value of the N1 bits is an identifier or an index number of the target remote device), and the N2 bits are for waking up the target remote device.

Optionally, when the value of the N bits is the first value, the N bits indicate to wake up the first remote device. When the value of the N bits is a second value, the N bits indicate to wake up another remote device (for example, a second remote device mentioned hereinafter).

Optionally, the first value is a pre-configured value, or the first value is a group of pre-configured values. When the first value is the group of pre-configured values, the group of values satisfy that values of M bits in the N bits are 1 and that values of N-M remaining bits are 0, where M is an integer less than or equal to N.

In a possible implementation, the first optical signal is a periodic signal. Specifically, the first optical signal for waking up the first remote device may be the periodic signal, and the parameter corresponding to the first optical signal on which transmission is performed in each periodicity indicates to wake up the first remote device, so that the first remote device can be woken up in each periodicity, to expect to improve a probability that the first remote device is woken up.

Based on the technical solution shown in FIG. 7, when the first remote device is in energy-saving mode, the control device may transmit the first optical signal to the first remote device in step S701 when the control device determines that the first remote device needs to be woken up, where the parameter corresponding to the first optical signal is for waking up the first remote device. In other words, after the first remote device receives the first optical signal, in step S702, the first remote device may wake up the first remote device based on the parameter corresponding to the first optical signal. Therefore, in comparison with an implementation in which a remote device can further determine a wake-up indication only by parsing information carried by an optical signal and based on a parsing result, in the foregoing technical solution, the first remote device can be woken up based on the parameter corresponding to the first optical signal, so that overheads of parsing the wake-up indication by the remote device can be reduced, to expect to improve an energy-saving effect.

In addition, in the foregoing implementation in which the first remote device is woken up based on the parameter corresponding to the first optical signal, when the first remote device does not continuously keep alive a communication link for bidirectional communication between the remote device and the control device, the first remote device can still be woken up at any time, so that the first remote device in energy-saving mode can power off more components, to expect to further improve the energy-saving effect.

It should be understood that, in this application, that the remote device (for example, the first remote device, or the second remote device or a third remote device that may occur hereinafter) is in energy-saving mode means that a part of functional components in the remote device are in power-off state (or a sleep state, a low power consumption state, a standby state, or the like). Accordingly, the energy-saving mode may be referred to as a sleep mode, a low power consumption mode, a standby mode, or another name. This is not limited herein.

It should be understood that, in this application, the remote device may be a network device having a radio signal processing function, the control device is a network device having a function of controlling the remote device, and the remote device and the control device may have other names.

For example, the remote device is radio equipment (radio equipment, RE), and the control device is a radio equipment controller (radio equipment controllor, REC).

For another example, the remote device is a remote radio unit (remote radio unit, RRU), and the control device is a baseband unit (baseband unit, BBU).

For another example, the remote device is an active antenna unit (active antenna unit, AAU), and the control device is a BBU.

For another example, the remote device is a radio unit (radio unit, RU), and the control device is a distributed unit (distributed unit, DU).

For another example, the remote device is an RE/RRU/AAU/RU, and the control device is a remote control device. The remote control device includes but is not limited to a remote network management device, an operation and maintenance center (Operation Management Center, OMC), a base station control unit, and the like.

In a possible implementation, before step S701, the method further includes: The first remote device receives indication information from the control device, where the indication information indicates the first remote device to enter the energy-saving mode.

Optionally, the indication information may further indicate other information, for example, at least one of a start moment at which the first remote device enters the energy-saving mode, an end moment at which the first remote device enters the energy-saving mode, and duration for which the first remote device enters the energy-saving mode.

Optionally, after the first remote device enters the energy-saving mode based on the indication information (or after the first remote device determines that the first remote device has entered the energy-saving mode, after the first remote device determines to enter the energy-saving mode, or at a moment before entering the energy-saving mode), the first remote device may further transmit a response to the control device, to indicate, by using the response, that the first remote device has entered (or is to enter) the energy-saving mode.

Optionally, the first remote device may alternatively determine, in another manner, to enter the energy-saving mode. For example, the first remote device determines, in a manner of manual configuration by operation and maintenance personnel (or a manner of pre-configuration before delivery), to enter the energy-saving mode in a specific time period.

In a possible implementation, when the first remote device is in energy-saving mode, P modules in the first remote device are in power-off state, where P is a positive integer, where the P modules include at least one of the following: a first module, configured to process a radio signal; a second module, configured to supply power to the first module; a third module, configured to transmit an optical signal; and a fourth module, configured to supply power to the third module. Therefore, when the first remote device is in energy-saving mode, the P modules in the first remote device are in power-off state, and more components are powered off as much as possible, to expect to improve the energy-saving effect. In addition, the P modules may be implemented by using at least one of the foregoing, to improve solution implementation flexibility.

It may be understood that a process in which the first remote device wakes up the first remote device based on the parameter corresponding to the first optical signal may be that the first remote device wakes up a part or all of the P modules.

Optionally, both the second module and the fourth module are power supply modules (which are also referred to as power supplies). The second module and the fourth module may be a same module, or may be different modules. This is not limited herein.

Optionally, the module configured to process the radio signal includes at least one of the following: a main central processing unit (central processing unit, CPU), an intermediate frequency application-specific integrated circuit (application-specific integrated circuit, ASIC), or a radio frequency unit.

Optionally, the module configured to process the radio signal may further include another component, for example, a component that may exist and that is configured to implement at least one function in encoding, rate matching, scrambling, modulation, layer mapping, precoding, resource element (resource element, RE) mapping, digital beamforming (beamforming, BF), inverse fast Fourier transform (invert fast fourier transform, IFFT), cyclic prefix (cyclic prefix, CP) addition, analog BF, and digital to analog (digital to analog, DA) conversion, and for another example, a component that may exist and that is configured to implement at least one function in decoding, de-rate matching, descrambling, demodulation, inverse discrete Fourier transform (inverse discrete fourier transformation, IDFT), channel equalization (or channel estimation), RE demapping, digital BF, fast Fourier transform (fast fourier transform, FFT), CP removal, analog BF, and analog to digital (analog to digital, AD) conversion.

In a possible implementation, when the first remote device is in energy-saving mode, Q modules in the first remote device are in power-on state, where Q is a positive integer, where the Q modules include at least one of the following: a fifth module, configured to receive an optical signal; a sixth module, configured to supply power to the fifth module; a seventh module, configured to identify a parameter corresponding to the optical signal; and an eighth module, configured to supply power to the seventh module. Therefore, when the first remote device is in energy-saving mode, the Q modules in the first remote device are in power-on state, and the Q modules are for supporting receiving of the optical signal and implementing waking up at any time based on the parameter corresponding to the optical signal. In addition, the Q modules may be implemented by using at least one of the foregoing, to improve the solution implementation flexibility. In this solution, the seventh module may wake up another module in the remote device. A wake-up manner may be direct wake-up (for example, a wake-up command is sent in a direct-connection manner) or indirect wake-up (for example, the wake-up command is forwarded via a relay device; or the seventh module wakes up the ninth module first, and then the ninth module wakes up the another module). This is not limited. The ninth module may be the first module or another independently disposed module. This is not limited.

Optionally, both the sixth module and the eighth module are power supply modules (which are also referred to as power supplies). The sixth module and the eighth module may be a same module, or may be different modules. This is not limited herein.

Optionally, the seventh module is integrated into the fifth module (that is, the fifth module is configured to receive the optical signal and identify the parameter corresponding to the optical signal); the seventh module is integrated into the sixth module; or the seventh module is integrated into the eighth module.

Optionally, the seventh module may be a module disposed independent of the fifth module, the sixth module, or the eighth module.

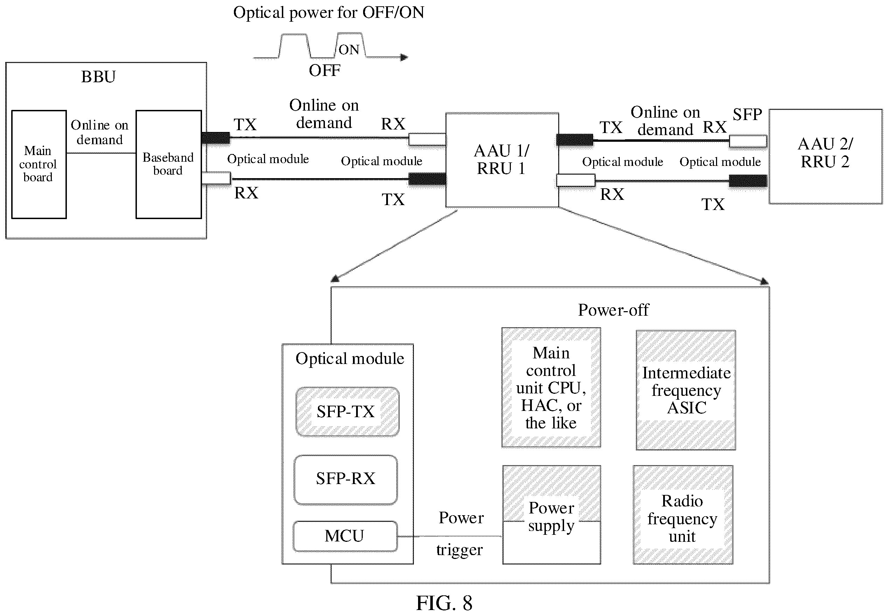

The following describes the P modules and the Q modules by using an example by using an implementation scenario shown in FIG. 8.

It should be understood that, in an example shown in FIG. 8, an example in which the control device is the BBU and the first remote device is an AAU 1/RRU 1 is used.

For the P modules in the AAU 1/RRU 1, the first module configured to process the radio signal includes a main control unit CPU/hardware accelerate controller (hardware accelerate controller, HAC), an intermediate frequency ASIC, a radio frequency unit, and the like in the figure; the second module configured to supply the power to the first module includes a part of a power supply (a shadow part of the power supply shown in the figure); the third module configured to transmit the optical signal is an SFP-TX in the figure; and the fourth module configured to supply the power to the third module includes the part of the power supply (the shadow part of the power supply shown in the figure).

For the Q modules in the AAU 1/RRU 1, the fifth module configured to receive the optical signal is the SFP-RX in the figure; the sixth module configured to supply the power to the fifth module is a part of the power supply in the figure (a blank part of the power supply shown in the figure); the seventh module configured to identify the parameter corresponding to the optical signal includes an MCU in the figure; and the eighth module configured to supply the power to the seventh module is the part of the power supply in the figure (the blank part of the power supply shown in the figure).

Optionally, in the example shown in FIG. 8, an example in which power modules (including the second module, the fourth module, the sixth module, and the eighth module) are integrated to provide one power supply is used. During actual application, any one of the power modules may be implemented by using an independent power supply, or any two or more of the power modules may be implemented in an integrated manner. This is not limited herein.

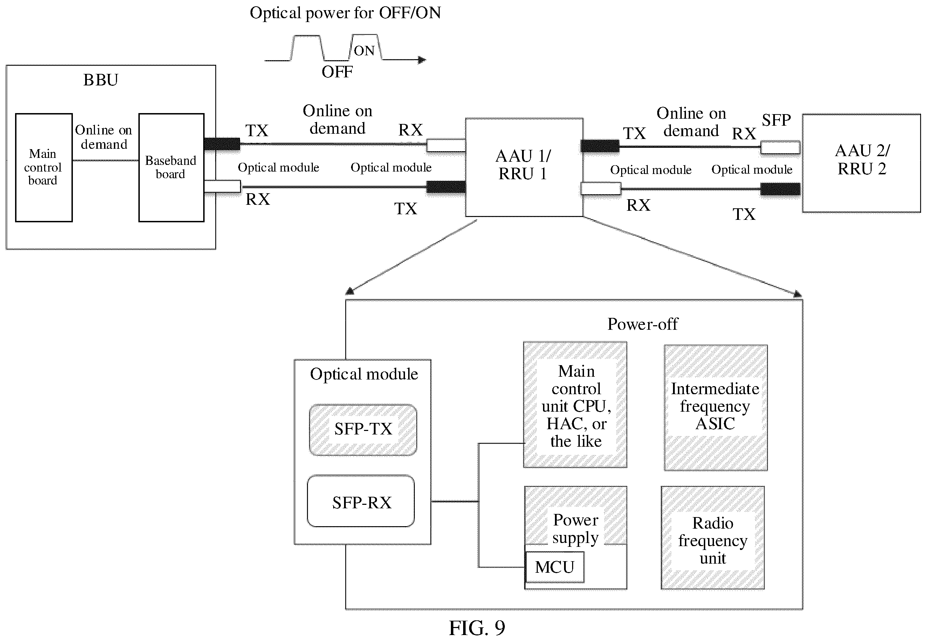

Optionally, there may be a plurality of flexible implementations of the MCU. For example, in FIG. 8, the MCU may be integrated into an optical module. For another example, in FIG. 9, the MCU may be integrated into a power supply. In addition, in addition to the implementation examples shown in FIG. 8 and FIG. 9, the MCU may alternatively be a module disposed independent of an optical module and a power supply, the MCU may alternatively be integrated into a main CPU, or there is another implementation. This is not limited herein.

When the method shown in FIG. 7 is applied to the scenario shown in FIG. 8, a main control board in the BBU notifies the baseband board to indicate the AAU 1/RRU 1 and an AAU 2/RRU 2 to enter the energy-saving mode. After receiving the indication, the AAU 1/RRU 1 replies to the BBU with a response corresponding to the indication, and the AAU 1/RRU 1 powers off a device/component other than a power supply that supplies power to the SFP-RX, the MCU, and the optical module.

Optionally, after receiving a response message, the BBU powers off the baseband board. Optionally, a module configured to receive an optical signal in the BBU may be further powered off.

Hereinafter, when a service needs to be provided, the BBU may perform step S701. That is, the BBU powers on the baseband board, and transmits an agreed optical signal (namely, the foregoing first optical signal) to the SFP-RX via the baseband board. A parameter corresponding to the agreed optical signal is for waking up the AAU 1/RRU 1. An MCU in the AAU 1/RRU 1 receives the optical signal that satisfies an agreement, and performs power supply trigger (power trigger) in step S702, to exit a power-off/sleep/energy-saving state.

Optionally, the MCU in the AAU 1/RRU 1 receives the optical signal that satisfies the agreement. After the MCU triggers power-on of the power supply, a sequence of triggering power-on of components such as the CPU/HAC, the SFP-TX, the intermediate frequency ASIC, and the radio frequency unit is not limited. For example, after triggering the power-on of the power supply, the MCU may sequentially transmit a power-on triggering signal to the components such as the CPU/HAC, the SFP-TX, the intermediate frequency ASIC, and the radio frequency unit. For another example, after triggering the power-on of the power supply, the MCU may transmit a power-on triggering signal to the CPU; and then the CPU transmits the power-on triggering signal to components such as the SFP-TX, the intermediate frequency ASIC, and the radio frequency unit.

In an implementation example, the parameter corresponding to the agreed optical signal may be the optical signal strength. For example, in the example shown in FIG. 8, the BBU controls a TX channel of this segment of optical module to transmit an optical on-off signal in a specific sequence, namely, the foregoing agreed optical signal, to wake up the AAU 1/RRU 1.

An example in which the agreed optical signal is a four-bit symbol (that is, the N bits for representing the first optical signal in the foregoing method are four bits) is used for description. An assumption is as follows: 1 represents that there is light, and 0 represents that there is no light (or vice versa); or 1 represents that intensity/a power of light is greater than (or greater than or equal to) a first threshold, and 0 represents that intensity/a power of light is less than or equal to (or less than) the first threshold. The manner may alternatively be described as follows: The optical signal may include four sub-time periods, light intensity in each sub-time period may be represented as one bit, a value of the bit is 0 or 1 based on the light intensity, and the four sub-time periods may be represented as four bits in total. Time lengths of all sub-time periods may be the same or different. This is not limited. The agreed optical signal may be in various possible forms. The 4-bit optical signal may have 16 values. Optionally, based on an energy ratio, the 16 values may be classified into the following five classes (classes), which may be represented as:
Class 0 {0000};
Class 1 {0001, 0010, 0100, and 1000};
Class 2 {0011, 0101, 0110, 1001, 1010, and 1100};
Class 3 {0111, 1110, 1011, and 1101}; and
Class 4 {1111}.

As described above, when the value of the N bits is the first value, the N bits indicate to wake up the first remote device.

Optionally, when the first value is a value, in the foregoing 16 values, "1010" is used as a wake-up signal. For example, when the BBU needs to wake up the AAU 1/RRU 1, the BBU transmits, to the AAU 1/RRU 1 through a Tx port of the optical module, an optical signal whose corresponding value is "1010". After receiving the optical signal through an Rx port of the optical module, the AAU 1/RRU 1 delivers the optical signal to the MCU for processing. If the MCU learns that the value of the optical signal is "1010", the MCU triggers waking up of the AAU 1/RRU 1.

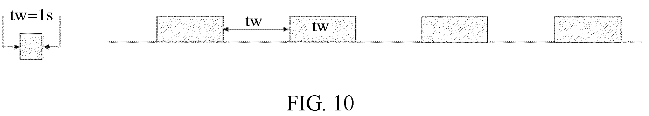

For example, if it is agreed that on-off of "1010" is the wake-up signal, an optical power for transmission on an optical fiber may be represented as FIG. 10. That is, the wake-up signal may be determined depending on whether there is an optical power corresponding to a signal in each preset time period (for example, the preset time period may be denoted as a time width (time width, tw for short) in the figure). The AAU 1/RRU 1 reads a receive optical power (denoted as an RX power) of the optical module with a sampling periodicity of less than tw seconds. Within the sampling periodicity, a record is 0 if there is a power; or a record is 1 if there is no power. The AAU1/RRU1 collects statistics for consecutive 4s. If on-off information of 0101 is identified, this device is woken up.

Particularly, if it is agreed that "1111" is a wake-up signal, this device may be woken up as long as the remote device detects an optical power of a specific time length on the optical fiber.

Optionally, when the BBU needs to wake up the remote device, the BBU cyclically (or periodically) transmits the foregoing optical signal, to expect to increase a probability that the AAU 1/RRU 1 is woken up.

Optionally, when the first value is a group of values. For example, in the foregoing five classes, a value in a class may be used as an optical signal for waking up the AAU 1/RRU 1. For example, the entire Class 2 is used as wake-up information. For a processing process, refer to the foregoing descriptions. In addition, for a receiver of the wake-up information, execution of the foregoing five classes may be implemented by using a process in Table 1 below.

**Table 1**

| Number | Meaning | Example (assuming that 0 indicates that there is no optical signal, statistics are collected once every 1s.) |
|---|---|---|
| Class 0 | There is no optical power in a statistical periodicity | 0000: There is no optical signal in the statistical periodicity |
| Class 1 | There is an optical power in 25% of the statistical periodicity | 0010: In the statistical periodicity, there is no optical power for 3s, there is an optical power for 1s, and a proportion of time for which there is light is 1s/(1s+3s)=25%. |
| Class 2 | There is an optical power in 50% of the statistical periodicity | 0110: In the statistical periodicity, there is no optical power for 2s, there is an optical power for 2s, and a proportion of time for which there is light is 2s/(2s+2s)=50%. |
| Class 3 | There is an optical power in 75% of the statistical periodicity | 1110: In the statistical periodicity, there is an optical power for 3s, there is no optical power for 1s, and a proportion of time for which there is light is 3s/(1s+3s)=75%. |
| Class 4 | There is an optical power in 100% of the statistical periodicity | 1111: In the statistical periodicity, there is an optical power for 4s, and a proportion of time for which there is light is 4s/(0s+4s)=100%. |

Optionally, to improve a tolerance capability of the system, a group of signals, for example, Class 2 above, may be usually used as wake-up signals. In addition, to further improve robustness, a range from 35% to 65% (or another range including 25% corresponding to the class, for example 30% to 60%) may be considered as Class 2. For a statistical feature, namely, 50%, even if a clock deviation between a peer end and a local end is quite large, a statistical deviation of whether there is an optical power is not large, an anti-interference capability is strong, and an identification degree is high.

In an implementation example, in the scenario shown in FIG. 8, the MCU may alternatively be located at another location. For example, in a scenario shown in FIG. 9, the MCU may be integrated into the power supply.

In a possible implementation, in any one of the foregoing technical solutions, the first remote device is included in at least two remote devices, and the at least two remote devices are cascaded to the control device. Specifically, the first remote device woken up based on the parameter corresponding to the first optical signal is included in the at least two remote devices, and the at least two remote devices are cascaded to the control device, so that the solution is not restricted by a direct-connection scenario, and can be applied to a cascading scenario (for example, the at least two remote devices and the control device are networked in a chain form, a star form, or a mesh-network form).

In a possible implementation, the first remote device is an intermediate device that is in the at least two remote devices and that is cascaded to the control device, and the method further includes: The control device transmits a second optical signal to the second remote device via the first remote device, where a parameter corresponding to the second optical signal is for waking up the second remote device. Specifically, when the first remote device is the intermediate device that is in the at least two remote devices and that is cascaded to the control device, the control device may further transmit the second optical signal to another remote device via the first remote device, and wake up the another remote device based on the parameter corresponding to the second optical signal, to flexibly control different remote devices in a cascading scenario.

In a possible implementation, that the control device transmits a second optical signal to the second remote device via the first remote device includes: After determining that the first remote device is woken up, the control device transmits the second optical signal to the second remote device via the first remote device. Specifically, after determining that the first remote device is woken up, the control device transmits the second optical signal to the second remote device via the first remote device, so that the first remote device identifies the second optical signal after being woken up, and transmits the second optical signal to the second remote device when determining that a receiver of the second optical signal indicates the second remote device. In other words, before the first remote device is woken up, the first remote device may power off (or sleep) a component corresponding to a communication link between the first remote device and the second remote device (and a component configured to identify the second optical signal), to expect to further improve the energy-saving effect of the first remote device.

Optionally, a process in which the control device transmits the second optical signal to the second remote device via the first remote device does not need to depend on waking up the first remote device. For example, when the first remote device is in energy-saving mode, the first remote device may maintain the component corresponding to the communication link between the first remote device and the second remote device (and the component configured to identify the second optical signal) in power-on state, and support forwarding of the second optical signal before the first remote device is woken up, so that the control device flexibly controls a wake-up process of each remote device.

In a possible implementation, the first remote device is an endpoint device that is in the at least two remote devices and that is cascaded to the control device; and that the control device transmits the first optical signal to the first remote device includes: The control device transmits the first optical signal to the first remote device via the third remote device. Specifically, when the first remote device is the endpoint device that is in the at least two remote devices and that is cascaded to the control device, the control device may transmit the first optical signal to the first remote device via another remote device (for example, the third remote device), so that the control device flexibly controls the wake-up process of each remote device.

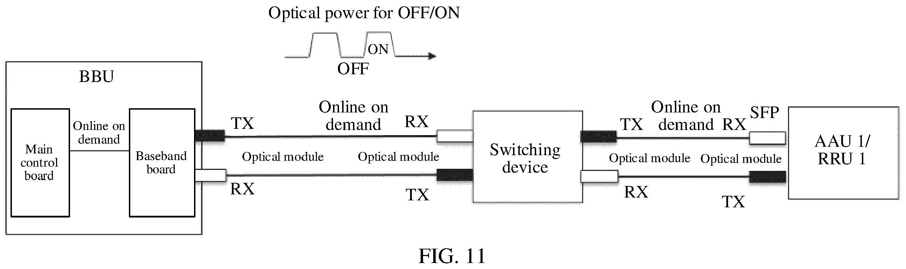

For example, in a scenario shown in FIG. 11, the control device may be a BBU in the figure. For example, the first remote device may be an AAU 1/RRU 1 in the figure, and the third remote device may be another AAU/RRU, or may be a switching device in the figure.

In FIG. 11, in an implementation process in which the AAU 1/RRU 1 enters an energy-saving mode, after the BBU transmits an indication of entering the energy-saving mode to the interconnected switching device, the switching device may forward the indication to the AAU 1/RRU 1, so that the AAU 1/RRU 1 enters the energy-saving mode. In addition, when the BBU determines that the AAU 1/RRU 1 needs to be woken up, the BBU wakes up the switching device by using the foregoing agreed optical signal, and then the switching device forwards the wake-up signal to wake up the AAU/RRU device.

Optionally, as described above, the agreed optical signal received by the switching device may include the N bits. When the N bits include the N1 bits and the N2 bits, the N1 bits indicate the target remote device that is to be woken up (for example, the value of the N1 bits is the identifier or the index number of the target remote device), and the N2 bits are for waking up the target remote device. Accordingly, in the scenario shown in FIG. 11, after the switching device receives the optical signal from the BBU, when the switching device determines, based on the N1 bits in the N bits corresponding to the parameter of the optical signal, that a receiver of the optical signal is the switching device, the switching device may wake up this device based on the N1 bits. When the switching device determines, based on the N1 bits in the N bits corresponding to the parameter of the optical signal, that a receiver of the optical signal is the AAU 1/RRU 1, the switching device may forward the optical signal to the AAU 1/RRU 1, so that the AAU 1/RRU 1 wakes up this device based on the N1 bits. For example, when the value of the N1 bits is an agreed value or within an agreed value range, the optical signal is for waking up this device. For different devices, for example, the switching device and the AAU 1/RRU 1, agreed values or agreed value ranges may be the same, or may be different. This is not limited.

Particularly, if the switching device is a physical optical splitting device, the switching device may directly forward the wake-up signal of the BBU to the interconnected AAU 1/RRU 1.

It can be learned from the foregoing implementation process that the technical solutions provided in this application do not depend on establishment of an optical transmission link at a data link layer and a layer above the data link layer, and a problem that the remote device needs to be woken up at any time can be resolved by only controlling the parameter corresponding to the optical signal.

In some implementation processes, a thin control end (for example, the foregoing MCU) is introduced into the remote device AAU/RRU, to complete a control/processing function in an energy-saving period. That is, after the remote device enters a deep sleep mode, power consumption of the remote device only needs to be capable of maintaining power supply of the thin control end and the optical module RX (the TX may be turned off). The thin control end may be understood as a control module that provides only a few/limited control functions or processing functions. Compared with the conventional control module CPU in the AAU/RRU, the thin control end may have a simpler design and lower energy consumption.

In some implementation processes, the remote device reserves only an RX channel of the optical module and one thin control unit in a low power consumption operating state, and other components/devices are all energy-saving/power-off.

In some implementation processes, the control device transfers, on an optical fiber, whether there is an optical signal (or optical signal strength), and the remote device obtains a receive optical power (RX channel) in the optical module. When the optical power satisfies a specific condition, the remote device is autonomously woken up by using the thin control end. In other words, it is agreed that a signal value or a class of signal values are a wake-up signal. Therefore, an optical power signal transferred on an optical fiber link is demodulated by using a statistics collection method, so that the system has a strong anti-noise capability, and waking up is accuracy.

In some implementation processes, when the remote device has a cascading TOPO, a star TOPO, and other TOPOs, an upper-level device may wake up a lower-level device level by level. The solution is not restricted by a direct connection constraint, and may be applied to a scenario such as networking in a chain form, a star form, or a mesh-network form.

To implement the functions in the method provided in this application, a device for performing the method may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

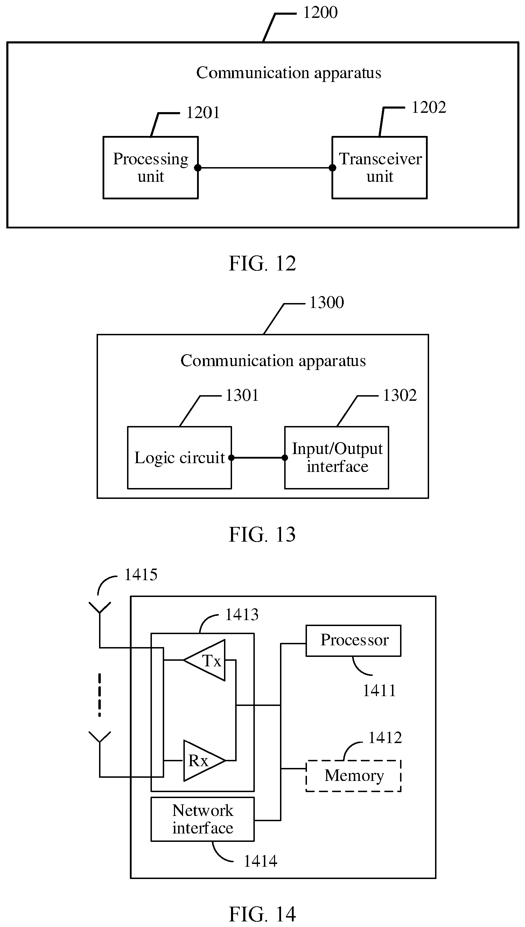

Refer to FIG. 12. This application provides a communication apparatus 1200. The apparatus 1200 includes a processing unit 1201 and a transceiver unit 1202.

In an implementation example, the communication apparatus 1200 may implement the functions of the control device in the foregoing method, and therefore can also implement the beneficial effects of the foregoing method. In this application, the communication apparatus 1200 may be a control device, or may be a software module, an integrated circuit, an element, or the like in the control device, for example, a chip. This is not limited. The following provides descriptions by using an example in which the communication apparatus 1200 is the control device.

Specifically, the processing unit 1201 is configured to determine a first optical signal, where a parameter corresponding to the first optical signal is for waking up a first remote device. The transceiver unit 1202 is configured to transmit the first optical signal to the first remote device.

In a possible implementation, the parameter corresponding to the first optical signal includes at least one of the following: optical signal strength or LOS detection.

In a possible implementation, that a parameter corresponding to the first optical signal is for waking up a first remote device includes: When the parameter corresponding to the first optical signal includes the optical signal strength, the optical signal strength is represented as N bits; and when a value of the N bits is a first value, the first optical signal is for waking up the first remote device, where N is a positive integer.

In a possible implementation, the first optical signal is a periodic signal.

In a possible implementation, the first remote device is included in at least two remote devices, and the at least two remote devices are cascaded to the control device.

In a possible implementation, the first remote device is an intermediate device that is in the at least two remote devices and that is cascaded to the control device, and the transceiver unit 1202 is further configured to transmit a second optical signal to a second remote device via the first remote device, where a parameter corresponding to the second optical signal is for waking up the second remote device.

In a possible implementation, after the processing unit 1201 determines that the first remote device is woken up, the transceiver unit 1202 transmits the second optical signal to the second remote device via the first remote device.

In a possible implementation, the first remote device is an endpoint device that is in the at least two remote devices and that is cascaded to the control device; and the transceiver unit 1202 is specifically configured to transmit the first optical signal to the first remote device via the third remote device.

In another implementation example, the communication apparatus 1200 may implement the functions of the first remote device in the foregoing method, and therefore can also implement the beneficial effects of the foregoing method. In this application, the communication apparatus 1200 may be a first remote device, or may be a software module, an integrated circuit, an element, or the like in the first remote device, for example, a chip. This is not limited. The following provides descriptions by using an example in which the communication apparatus 1200 is the first remote device.

Specifically, the transceiver unit 1202 is configured to receive a first optical signal. The processing unit 1201 is configured to wake up the first remote device based on a parameter corresponding to the first optical signal.

In a possible implementation, the parameter corresponding to the first optical signal includes at least one of the following: optical signal strength or LOS detection.

In a possible implementation, the first remote device is in energy-saving mode, and P modules in the first remote device are in power-off state, where P is a positive integer, where the P modules include at least one of the following: a first module, configured to process a radio signal; a second module, configured to supply power to the first module; a third module, configured to transmit an optical signal; and a fourth module, configured to supply power to the third module.

In a possible implementation, the module configured to process the radio signal includes at least one of the following: a main central processing unit CPU, an intermediate frequency application-specific integrated circuit ASIC, or a radio frequency unit.

In a possible implementation, the first remote device is in energy-saving mode, and Q modules in the first remote device are in power-on state, where Q is a positive integer, where the Q modules include at least one of the following: a fifth module, configured to receive an optical signal; a sixth module, configured to supply power to the fifth module; a seventh module, configured to identify a parameter corresponding to the optical signal; and an eighth module, configured to supply power to the seventh module.

In a possible implementation, the seventh module is integrated into the fifth module; or the seventh module is integrated into the eighth module.

In a possible implementation, that the parameter corresponding to the first optical signal is for waking up the first remote device includes: When the parameter corresponding to the first optical signal includes the optical signal strength, the optical signal strength is represented as N bits; and when a value of the N bits is a first value, the first optical signal is for waking up the first remote device, where N is a positive integer.

In a possible implementation, the first optical signal is a periodic signal.

In a possible implementation, the first remote device is included in at least two remote devices, and the at least two remote devices are cascaded to the control device.

In a possible implementation, the first remote device is an intermediate device that is in the at least two remote devices and that is cascaded to the control device, and the transceiver unit 1202 is further configured to receive a second optical signal, where a parameter corresponding to the second optical signal is for waking up a second remote device; and the transceiver unit 1202 is further configured to transmit the second optical signal to the second remote device.

In a possible implementation, after the processing unit 1201 wakes up the first remote device, the transceiver unit 1202 transmits the second optical signal to the second remote device.

In a possible implementation, the first remote device is an endpoint device that is in the at least two remote devices and that is cascaded to the control device; and the transceiver unit 1202 is specifically configured to receive the first optical signal via a third remote device.

It should be noted that, for details of content such as an information execution process of the units in the communication apparatus 1200, refer to the descriptions in the foregoing method in this application. Details are not described herein again.

FIG. 13 is another diagram of a structure of a communication apparatus 1300 according to this application. The communication apparatus 1300 includes at least a logic circuit 1301. The communication apparatus 1300 may be a chip or an integrated circuit.

Optionally, the communication apparatus further includes an input/output interface 1302.

The transceiver unit 1202 shown in FIG. 12 may be a communication interface. The communication interface may be the input/output interface 1302 in FIG. 13, and the input/output interface 1302 may include an input interface and an output interface. Alternatively, the communication interface may be a transceiver circuit, and the transceiver circuit may include an input interface circuit and an output interface circuit.

Optionally, the logic circuit 1301 may be configured to determine a first optical signal, and the input/output interface 1302 may be configured to transmit the first optical signal, where a parameter corresponding to the first optical signal is for waking up a first remote device. It should be understood that the logic circuit 1301 and the input/output interface 1302 may further perform other steps performed by the control device in any one of the foregoing examples, and implement corresponding beneficial effects. Details are not described herein again.

Optionally, the input/output interface 1302 may be configured to receive the first optical signal, and the logic circuit 1301 may wake up the first remote device based on the parameter corresponding to the first optical signal. It should be understood that the logic circuit 1301 and the input/output interface 1302 may further perform other steps performed by the first remote device in any one of the foregoing examples, and implement corresponding beneficial effects. Details are not described herein again.

In a possible implementation, the processing unit 1201 shown in FIG. 12 may be the logic circuit 1301 in FIG. 13.

Optionally, the logic circuit 1301 may be a processing apparatus, and a part or all of functions of the processing apparatus may be implemented by using software. A part or all of functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application specific integrated circuits, ASICs), system-on-chips (system on chips, SoCs), central processing units (central processor units, CPUs), network processors (network processing, NPs), digital signal processing circuits (digital signal processors, DSPs), micro controller units (micro controller units, MCUs), programmable controllers (programmable logic devices, PLDs) or other integrated chips, or any combination of the foregoing chips or processors.

FIG. 14 is a diagram of a structure of a communication apparatus 1400 in the foregoing example according to this application. The communication apparatus 1400 may be specifically the communication apparatus used as the control device or the first remote device in the foregoing example. For a structure of the communication apparatus, refer to the structure shown in FIG. 14.

The communication apparatus 1400 includes at least one processor 1411 and at least one network interface 1414.

Further, optionally, the communication apparatus further includes at least one memory 1412, at least one transceiver 1413, and one or more antennas 1415. The processor 1411, the memory 1412, the transceiver 1413, and the network interface 1414 are connected to each other, for example, through a bus. In this application, the connection may include various categories of interfaces, transmission lines, buses, or the like. This is not limited in this application. The antenna 1415 is connected to the transceiver 1413. The network interface 1414 is configured to enable the communication apparatus to communicate with another communication device through a communication link. For example, the network interface 1414 may include a network interface between the communication apparatus and a core network device, for example, an S1 interface. The network interface may include a network interface between the communication apparatus and another communication apparatus (for example, another network device or core network device), for example, an X2 or Xn interface.

The processor 1411 is mainly configured to: process a communication protocol and communication data, control the entire communication apparatus, execute a software program, and process data of the software program, for example, is configured to support the communication apparatus in performing the actions in the foregoing implementation process. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 1411 in FIG. 14 may integrate functions of the baseband processor and the central processing unit. A person skilled in the art may understand that the baseband processor and the central processing unit may alternatively be processors independent of each other, and are interconnected by using a technology like a bus. A person skilled in the art may understand that the network device may include a plurality of baseband processors to adapt to different network standards, the network device may include a plurality of central processing units to enhance a processing capability of the network device, and components of the network device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor; or may be stored in the memory in a form of a software program, and the processor executes the software program to implement a baseband processing function.

The memory is mainly configured to store the software program and data. The memory 1412 may exist independently, and is connected to the processor 1411. Optionally, the memory 1412 may alternatively be integrated with the processor 1411, for example, integrated into one chip. The memory 1412 can store program code for executing the technical solutions in this application, and the processor 1411 controls the execution. Various categories of executed computer program code may also be considered as drivers of the processor 1411.

FIG. 14 shows only one memory and one processor. In an actual network device, there may be a plurality of processors and a plurality of memories. The memory may also be referred to as a storage medium, a storage device, or the like. The memory may be a storage element located on a same chip as the processor, that is, an on-chip storage element, or an independent storage element. This is not limited in this application.

The transceiver 1413 may be configured to support receiving or transmitting of a radio signal between the communication apparatus and a terminal, and the transceiver 1413 may be connected to the antenna 1415. The transceiver 1413 includes a transmitter Tx and a receiver Rx. Specifically, the one or more antennas 1415 may receive a radio signal. The receiver Rx in the transceiver 1413 is configured to: receive the radio signal from the antenna, convert the radio signal into a digital baseband signal or a digital intermediate frequency signal, and provide the digital baseband signal or the digital intermediate frequency signal for the processor 1411, so that the processor 1411 further processes the digital baseband signal or the digital intermediate frequency signal, for example, performs demodulation processing and decoding processing. In addition, the transmitter Tx in the transceiver 1413 is further configured to: receive a modulated digital baseband signal or digital intermediate frequency signal from the processor 1411, convert the modulated digital baseband signal or digital intermediate frequency signal into a radio signal, and transmit the radio signal through the one or more antennas 1415. Specifically, the receiver Rx may selectively perform one-level or multi-level down mixing processing and analog to digital conversion processing on the radio signal, to obtain a digital baseband signal or a digital intermediate frequency signal. A sequence of the down mixing processing and the analog to digital conversion processing is adjustable. The transmitter Tx may selectively perform one-level or multi-level up mixing processing and digital to analog conversion on the modulated digital baseband signal or digital intermediate frequency signal, to obtain the radio signal. A sequence of the up mixing processing and the digital to analog conversion is adjustable. The digital baseband signal and the digital intermediate frequency signal may be collectively referred to as digital signals.

The transceiver 1413 may also be referred to as a transceiver unit, a transceiver apparatus, or the like. Optionally, a component configured to implement a receiving function in the transceiver unit may be considered as a receiving unit, and a component configured to implement a transmitting function in the transceiver unit may be considered as a transmitting unit. That is, the transceiver unit includes the receiving unit and the transmitting unit. The receiving unit may also be referred to as a receiver, an input port, a receiving circuit, or the like. The transmitting unit may be referred to as a transmitter, a transmitting circuit, or the like.

It should be noted that the communication apparatus 1400 shown in FIG. 14 may be specifically configured to implement the steps implemented by the control device or the first remote device in the foregoing method, and implement the technical effects corresponding to the control device or the first remote device. For specific implementations of the communication apparatus 1400 shown in FIG. 14, refer to the descriptions in the foregoing method. Details are not described one by one herein again.

Division into modules in this application is an example, is merely logical function division, and may be other division during actual implementation. In addition, functional modules in this application may be integrated into one processor, or may exist alone physically, or two or more modules are integrated into one module. The integrated module may be implemented in a form of hardware, or may be implemented in a form of a software functional module.

All or a part of the technical solutions provided in this application may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that these modifications and variations fall within the scope of the claims of this application and their equivalent technologies.

## Claims

1. A communication method, comprising:
transmitting a first optical signal, wherein a parameter corresponding to the first optical signal is for waking up a first remote device, wherein
the parameter corresponding to the first optical signal comprises at least one of the following:
optical signal strength or loss of signal LOS detection.

2. The method according to claim 1, wherein that a parameter corresponding to the first optical signal is for waking up a first remote device comprises:
when the parameter corresponding to the first optical signal comprises the optical signal strength, the optical signal strength is represented as N bits; and when a value of the N bits is a first value, the first optical signal is for waking up the first remote device, wherein N is a positive integer.

3. The method according to claim 1 or 2, wherein the first optical signal is a periodic signal.

4. The method according to any one of claims 1 to 3, wherein the first remote device is comprised in at least two remote devices, and the at least two remote devices are cascaded to a control device.

5. The method according to claim 4, wherein the first remote device is an intermediate device that is in the at least two remote devices and that is cascaded to the control device, and the method further comprises:
transmitting a second optical signal to a second remote device via the first remote device, wherein a parameter corresponding to the second optical signal is for waking up the second remote device.

6. The method according to claim 5, wherein the transmitting a second optical signal to a second remote device via the first remote device comprises:
after determining that the first remote device is woken up, transmitting the second optical signal to the second remote device via the first remote device.

7. A communication method, comprising:
receiving a first optical signal; and
waking up a first remote device based on a parameter corresponding to the first optical signal, wherein the parameter corresponding to the first optical signal comprises at least one of the following:
optical signal strength or loss of signal LOS detection.

8. The method according to claim 7, wherein the first remote device is in energy-saving mode, and P modules in the first remote device are in power-off state, wherein P is a positive integer, wherein
the P modules comprise at least one of the following:
a first module, configured to process a radio signal;
a second module, configured to supply power to the first module;
a third module, configured to transmit an optical signal; and
a fourth module, configured to supply power to the third module.

9. The method according to claim 7 or 8, wherein the first remote device is in energy-saving mode, and Q modules in the first remote device are in power-on state, wherein Q is a positive integer, wherein
the Q modules comprise at least one of the following:
a fifth module, configured to receive an optical signal;
a sixth module, configured to supply power to the fifth module;
a seventh module, configured to identify a parameter corresponding to the optical signal; and
an eighth module, configured to supply power to the seventh module.

10. The method according to claim 9, wherein
the seventh module is integrated into the fifth module; or
the seventh module is integrated into the eighth module.

11. The method according to any one of claims 7 to 10, wherein that the parameter corresponding to the first optical signal is for waking up the first remote device comprises:
when the parameter corresponding to the first optical signal comprises the optical signal strength, the optical signal strength is represented as N bits; and when a value of the N bits is a first value, the first optical signal is for waking up the first remote device, wherein N is a positive integer.

12. The method according to any one of claims 7 to 11, wherein the first optical signal is a periodic signal.

13. The method according to any one of claims 7 to 12, wherein the first remote device is comprised in at least two remote devices, and the at least two remote devices are cascaded to a control device.

14. The method according to claim 13, wherein the first remote device is an intermediate device that is in the at least two remote devices and that is cascaded to the control device, and the method further comprises:
receiving a second optical signal, wherein a parameter corresponding to the second optical signal is for waking up a second remote device; and
transmitting the second optical signal to the second remote device.

15. The method according to claim 14, wherein the transmitting the second optical signal to the second remote device comprises:
after waking up the first remote device, transmitting the second optical signal to the second remote device.

16. A communication apparatus, comprising a unit configured to perform the method according to any one of claims 1 to 6.

17. A communication apparatus, comprising at least one processor and a memory, wherein the at least one processor is coupled to the memory, and the processor is configured to perform the method according to any one of claims 1 to 6.

18. A communication apparatus, comprising a unit configured to perform the method according to any one of claims 7 to 15.

19. A communication apparatus, comprising at least one processor and a memory, wherein the at least one processor is coupled to the memory, and the processor is configured to perform the method according to any one of claims 7 to 15.

20. A communication system, comprising the communication apparatus according to claim 16 or 17 and the communication apparatus according to claim 18 or 19.

21. A computer-readable storage medium, wherein the medium stores instructions; and when the instructions are executed by a computer, the method according to any one of claims 1 to 15 is implemented.

22. A computer program product, comprising instructions, wherein when the instructions are run on a computer, the computer is enabled to perform the method according to any one of claims 1 to 15.
